# EUROPEAN PATENT APPLICATION

(11) **EP 3 232 150 A1**
(43) Date of publication of application: **18.10.2017**
(21) Application number: 17165946.9
(22) Date of filing: 11.04.2017
(51) Int. Cl.: G01B 3/10

(54) **TAPE MEASURE WITH FLEXIBLE FINGER BRAKE**

(30) Priority: 12.04.2016 US 201662321273 P
(71) Applicant: Irwin Industrial Tool Company, Huntersville, NC 28078 (US)
(72) Inventor: DeLeo, Anthony, Portage, MI 49024 (US); Parker, Gregory, Charlotte, NC 28216 (US); Lukan, Sean, Huntersville, NC 28078 (US); Engvall, David, Stanley, NC 28164 (US)
(74) Representative: SBD IPAdmin

(57) **Abstract**

A tape measure may include a housing including an interior space and a brake opening in communication with the interior space, a reel rotatably supported within the interior space, a tape blade at least partially wound on the reel, and a finger brake positioned adjacent the brake opening. The finger brake may include a support frame attached to the housing and including a frame opening, and a flexible member attached to the support frame and extending over the frame opening. The flexible member may be configured to deflect or elastically deform from a released position in which the flexible member is spaced apart from the tape blade to an engaged position in which at least a portion of the flexible member contacts a portion of the tape blade.

## Description

The present disclosure relates generally to tape measures and methods for using tape measures and more particularly to a tape measure having a flexible finger brake and a related method for using the flexible finger brake to control extension and retraction of a tape blade of the tape measure.

Various types of tape measures are known in the art for measuring linear distances. A tape measure generally may include a housing, a reel supported within an interior space of the housing, and a tape blade wound on the reel. The tape blade may be formed of a relatively flexible material and may include measurement indicia thereon to allow a user to measure linear distances. An end hook may be positioned at a distal end of the tape blade to allow for temporary attachment of the tape blade to an object during use and to prevent the tape blade from being completely rewound within the housing. During use of the tape measure, a portion of the tape blade may be unwound from the reel and extended out of the housing through a tape opening of the housing. Conventional tape measures may include a tape locking mechanism that may be actuated to a locked position to maintain the tape blade in a desired extended position and then released to an unlocked position to allow the tape blade to be retracted or further extended. After taking a measurement, the extended portion of the tape blade may be rewound onto the reel and retracted into the housing. Conventional tape measures also may include a retraction mechanism that automatically rewinds and retracts the tape blade when the tape locking mechanism is in the unlocked position and the tape blade is not prohibitively restrained by a user or an object.

In certain circumstances, a user may maintain the tape blade in a desired extended position by pressing the user's index finger against a bottom surface of the tape blade in front of the tape opening of the housing. In this manner, the user may save time by not having to actuate and subsequently release the tape locking mechanism. After taking a measurement, the user may decrease or remove the pressure applied to the bottom surface of the tape blade such that the extended portion of the tape blade is rewound onto the reel and retracted into the housing by the retraction mechanism. While the tape blade is rewound and retracted, the user may continue to apply some pressure to the bottom surface of the tape blade to brake (*i*.*e*., slow down the speed of) the rewinding and retraction of the tape blade. Such braking may reduce wear of the tape measure, thereby extending its useful life. Although pressing an index finger against the bottom surface of the tape blade in front of the tape opening may be effective to maintain the tape blade in a desired extended position and to brake the rewinding and retraction of the tape blade, such practice may present certain problems. For example, some users may face challenges in positioning their index finger adjacent the tape opening while holding the tape measure in an ergonomically preferred manner, particularly when the tape measure includes a large housing necessary to contain a long tape blade. Additionally, pressing an index finger against the bottom surface of the tape blade in front of the tape opening may result in the finger being cut or pinched by the tape blade or the end hook while the tape blade is rewound and retracted.

According to certain conventional tape measures, the housing may include a finger opening defined in a bottom surface of the housing behind the tape opening. The finger opening may allow a user to insert the user's index finger through the opening and apply pressure to the bottom surface of a portion of the tape blade positioned within the housing. In this manner, the user may apply pressure to maintain the tape blade in a desired extended position or to brake the rewinding and retraction of the tape blade. However, these conventional tape measures may present certain problems. For example, the finger opening may allow moisture, dirt, and other debris, either from the user's finger or elsewhere, to enter the interior space of the housing. Such foreign contaminants may accumulate within the interior space, which may compromise the function and integrity of internal components of the tape measure, may slow extension and retraction of the tape blade, and may abrade a coating off of the tape blade such that the measurement indicia become illegible over time. Additionally, pressing an index finger against the bottom surface of the tape blade may result in the finger being cut or pinched by the tape blade while the tape blade is rewound and retracted.

Other conventional tape measures may include a rigid finger brake positioned along a bottom surface of the housing behind the tape opening. The rigid finger brake may be pivotally attached to the housing and arranged such that a user may press the finger brake with the user's index finger to indirectly apply pressure to the bottom surface of a portion of the tape blade positioned within the housing. In this manner, the user may apply pressure to maintain the tape blade in a desired extended position or to brake the rewinding and retraction of the tape blade. However, these conventional tape measures may present certain problems. For example, the rigidity of the finger brake may prevent the user from having a desired tactile feel when braking the rewinding and retraction of the tape blade. Additionally, the mechanism of the rigid finger brake may require significant space in order to operate properly, which may necessitate use of an undesirably large or clumsy housing or may result in the finger brake extending far below the bottom surface of the housing.

The detailed description is set forth with reference to the accompanying drawings. The use of the same reference numerals may indicate similar or identical items. Various embodiments may utilize elements and/or features other than those illustrated in the drawings, and some elements and/or features may not be present in various embodiments. Elements and/or features in the drawings are not necessarily drawn to scale. Throughout this disclosure, depending on the context, singular and plural terminology may be used interchangeably.
FIG. 1A is a perspective view of a tape measure in accordance with one or more embodiments of the disclosure.
FIG. 1B is a perspective view of the tape measure of FIG. 1A.
FIG. 1C is a side view of the tape measure of FIG. 1A.
FIG. 1D is a side view of the tape measure of FIG. 1A.
FIG. 1E is a top view of the tape measure of FIG. 1A.
FIG. 1F is a bottom view of the tape measure of FIG. 1A.
FIG. 1G is a front view of the tape measure of FIG. 1A.
FIG. 1H is a back view of the tape measure of FIG. 1A.
FIG. 1I is a side cross-sectional view of the tape measure of FIG. 1A, taken along line 1I-1I of FIG. 1E.
FIG. 1J is a perspective view of a finger brake of the tape measure of FIG. 1A.
FIG. 1K is a perspective view of the finger brake of the tape measure of FIG. 1A.
FIG. 1L is a side view of the finger brake of the tape measure of FIG. 1A.
FIG. 1M is a top view of the finger brake of the tape measure of FIG. 1A.
FIG. 1N is a side cross-sectional view of the tape measure of FIG. 1A, showing a portion of a tape blade of the tape measure in an extended position and the finger brake in a released position.
FIG. 1O is a side cross-sectional view of the tape measure of FIG. 1A, showing the portion of the tape blade in the extended position and the finger brake in an engaged position.
FIG. 2A is a perspective view of a finger brake for a tape measure in accordance with one or more embodiments of the disclosure.
FIG. 2B is a perspective view of the finger brake of FIG. 2A.
FIG. 2C is a top view of the finger brake of FIG. 2A.
FIG. 2D is a side view of the finger brake of FIG. 2A.
FIG. 2E is a side cross-sectional view of the finger brake of FIG. 2A, taken along line 2E-2E of FIG. 2C.
FIG. 2F is an exploded perspective view of the finger brake of FIG. 2A.
FIG. 3A is a perspective view of a finger brake for a tape measure in accordance with one or more embodiments of the disclosure.
FIG. 3B is a perspective view of the finger brake of FIG. 3A.
FIG. 3C is a top view of the finger brake of FIG. 3A.
FIG. 3D is a side view of the finger brake of FIG. 3A.
FIG. 3E is a side cross-sectional view of the finger brake of FIG. 3A, taken along line 3E-3E of FIG. 3C.
FIG. 3F is an exploded perspective view of the finger brake of FIG. 3A.

### OVERVIEW

Described below are example embodiments of a tape measure as well as individual components and features of the tape measure. The tape measure may be used in various applications to measure linear distances. As described below, the tape measure may include a finger brake configured to control extension and retraction of a tape blade of the tape measure. In particular, the finger brake may be configured to allow a user to maintain the tape blade in a desired extended position and to brake the rewinding and retraction of the tape blade into a housing of the tape measure. During use of the tape measure, a portion of the finger brake may be pressed by the user's index finger from a released position to an engaged position to achieve these functions.

As compared to certain existing tape measures, embodiments of the tape measure described herein may allow the user to control extension and retraction of the tape blade while holding the tape measure in an ergonomically preferred manner, even when the tape measure includes a relatively large housing, may prevent or at least reduce the likelihood of the user's finger being cut or pinched by the tape blade or an end hook while the tape blade is rewound and retracted, may prevent or at least reduce the likelihood of foreign contaminants entering into and accumulating within the housing of the tape measure, may allow the user to have a desired tactile feel when braking the rewinding and retraction of the tape blade, and/or may provide the finger brake in a compact configuration that conforms to the overall shape of the tape measure and does not require an undesirably large or clumsy housing.

According to one aspect of the present invention, a tape measure may include a housing including an interior space and a brake opening in communication with the interior space, a reel rotatably supported within the interior space, a tape blade at least partially wound on the reel, and a finger brake positioned adjacent the brake opening. The finger brake may include a support frame attached to the housing and including a frame opening, and a flexible member attached to the support frame and extending at least partially over the frame opening. The flexible member may, for example, be configured to deflect or elastically deform from a released position in which the flexible member is spaced apart from the tape blade to an engaged position in which at least a portion of the flexible member contacts a portion of the tape blade.

In certain example embodiments, the housing may include a top wall, a bottom wall, a front wall, a back wall, a first side wall, and a second side wall, and the brake opening may be defined in the bottom wall of the housing. In certain example embodiments, the housing may include a tape opening in the front wall of the housing and in communication with the interior space, and the tape opening may be configured to allow the tape blade to pass therethrough. In certain example embodiments, the tape measure may include a tape lock configured to selectively maintain the tape blade in a desired extended position, the housing may include a lock opening in the front wall of the housing and in communication with the interior space, and the tape lock may be positioned at least partially within the lock opening. In certain example embodiments, the tape measure may include a retraction mechanism configured to automatically retract an extended portion of the tape blade into the housing.

In certain example embodiments, the finger brake may completely cover the brake opening. In certain example embodiments, the support frame may be formed of a rigid or substantially rigid material, and the flexible member may be formed of a flexible material. In certain example embodiments, the support frame may be formed of a plastic or a metal, and the flexible member may be formed of an elastomeric material. In certain example embodiments, the support frame may be fixedly attached to the housing, and the support frame may include one or more attachment protrusions received within one or more attachment receptacles defined in the housing.

In certain example embodiments, the support frame may include a front member, a back member, a first side member, and a second side member attached to one another and extending around the frame opening, and the flexible member may include a base extending from the front member to the back member, a first sidewall extending from the base to the first side member and from the front member to the back member, and a second sidewall extending from the base to the second side member and from the front member to the back member. In certain example embodiments, inner surfaces of the base, the first sidewall, and the second sidewall may be substantially smooth, and outer surfaces of the base, the first sidewall, and the second sidewall may be textured. In certain example embodiments, the flexible member may include an engagement protrusion positioned on an inner surface of the base and configured to engage a portion of the tape blade when the flexible member is in the engaged position.

In certain example embodiments, the flexible member may include an unsupported portion positioned over the frame opening, and a plurality of supported portions positioned over respective portions of the support frame. In certain example embodiments, a length of the unsupported portion may be within a range of between approximately 80% and approximately 100% of a length of the finger brake, and a width of the unsupported portion may be within a range of between approximately 80% and approximately 100% of a width of the finger brake. In certain example embodiments, a height of the finger brake may be within a range of between approximately 5% and approximately 25% of a height of the housing, a length of the finger brake may be within a range of between approximately 5% and approximately 50% of a length of the housing, and a width of the finger brake may be within a range of between approximately 25% and approximately 100% of a width of the housing.

According to another aspect of the invention, a method of using a tape measure may include the step of providing a tape measure including a housing including an interior space and a brake opening in communication with the interior space, a reel rotatably supported within the interior space, a tape blade at least partially wound on the reel, and a finger brake positioned adjacent the brake opening and including a flexible member. The method also may include the step of deflecting or elastically deforming the flexible member of the finger brake from a released position in which the flexible member is spaced apart from the tape blade to an engaged position in which at least a portion of the flexible member contacts a portion of the tape blade.

In certain example embodiments, the step of deflecting or elastically deforming the flexible member from the released position to the engaged position may include maintaining the tape blade in a desired extended position. In certain example embodiments, the step of deflecting or elastically deforming the flexible member from the released position to the engaged position may include braking retraction and rewinding of the tape blade.

According to still another aspect of the invention, a tape measure may include a housing including an interior space and a brake opening in communication with the interior space, a reel rotatably supported within the interior space, a tape blade at least partially wound on the reel, and a finger brake positioned adjacent the brake opening. The finger brake may include a flexible member configured to deflect or elastically deform from a released position in which the flexible member is spaced apart from the tape blade to an engaged position in which at least a portion of the flexible member contacts a portion of the tape blade. In certain example embodiments, the flexible member may be formed of an elastomeric material.

It is to be understood that any feature, including any optional feature, of any aspect of the invention may be a feature, including being an optional feature, of any other aspect of the invention. These and other example embodiments of the disclosure are described in more detail through reference to the accompanying drawings in the detailed description that follows. Certain components and features of the tape measure are described herein with reference to example embodiments illustrated in the drawings; however, such components and features are not limited to the example embodiments illustrated in the drawings. Certain components and features of the tape measure are described herein as having a length extending relative to an x-axis, a width extending relative to a y-axis, and/or a height or thickness extending relative to a z-axis. The respective axes are shown in the drawings with respect to the tape measure or components thereof.

Certain components and features of the tape measure are described herein using the terms "top," "bottom," "front," "back," or "side." It will be understood that these terms are used to describe a relative position of a component or feature of the tape measure when the tape measure is in a particular orientation, such as an orientation shown in the drawings. Certain relationships between components or features of the tape measure are described herein using the terms "above," "below," "in front of," or "behind." It will be understood that these terms are used to describe a relative relationship between two or more components or features of the tape measure when the tape measure is in a particular orientation, such as an orientation shown in the drawings.

Certain components and features of the tape measure are described herein using the terms "first," "second," "third," etc. These terms are used only to distinguish one component or feature from another identical or similar component or feature. For example, a "first" component or feature could be termed a "second" component or feature, and, similarly, a "second" component or feature could be termed a "first" component or feature, without departing from the scope of the disclosure. Additionally, as used herein the term "and/or" includes any and all combinations of one or more of the associated listed items.

Certain dimensions of components and features of the tape measure are described herein using the term "approximately." As used herein, the term "approximately" indicates that each of the described dimensions is not a strict boundary or parameter and does not exclude functionally similar variations therefrom. Unless context or the description indicates otherwise, the use of the term "approximately" in connection with a numerical parameter indicates that the numerical parameter includes variations that, using mathematical and industrial principles accepted in the art (e.g., rounding, measurement or other systematic errors, manufacturing tolerances, etc.), would not vary the least significant digit.

### ILLUSTRATIVE EMBODIMENTS

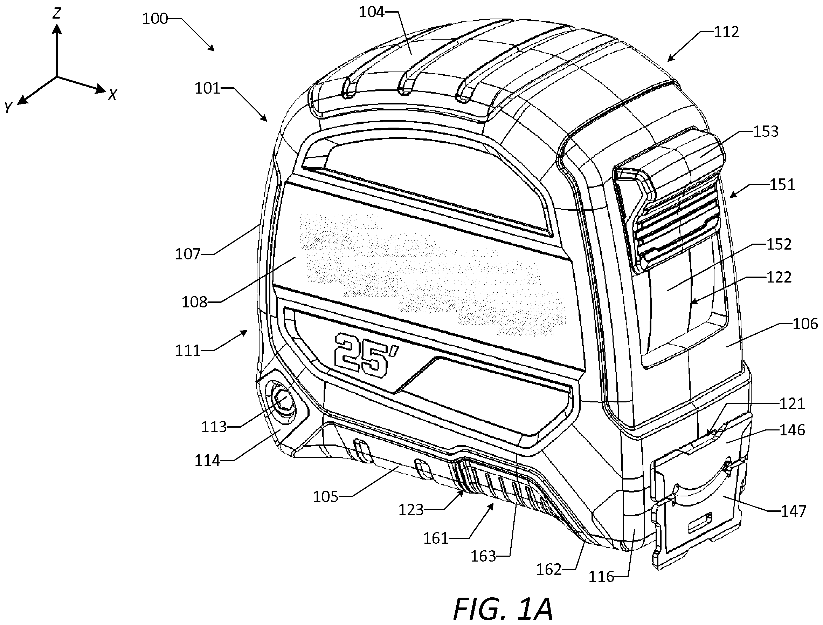

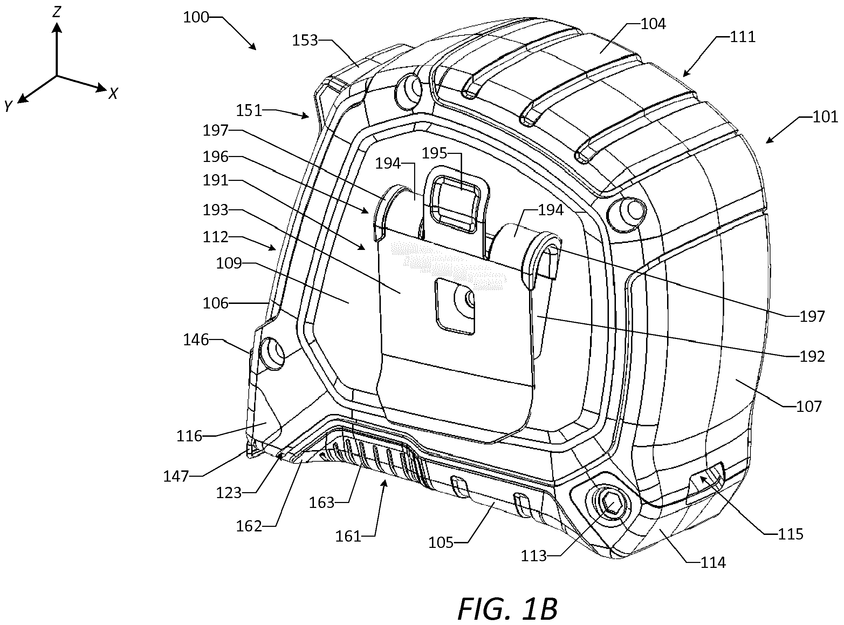

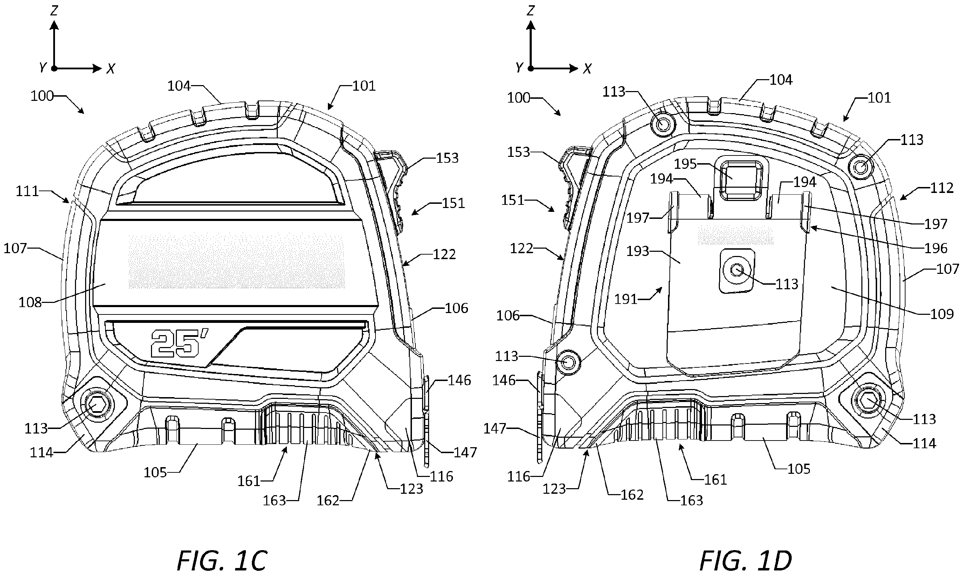

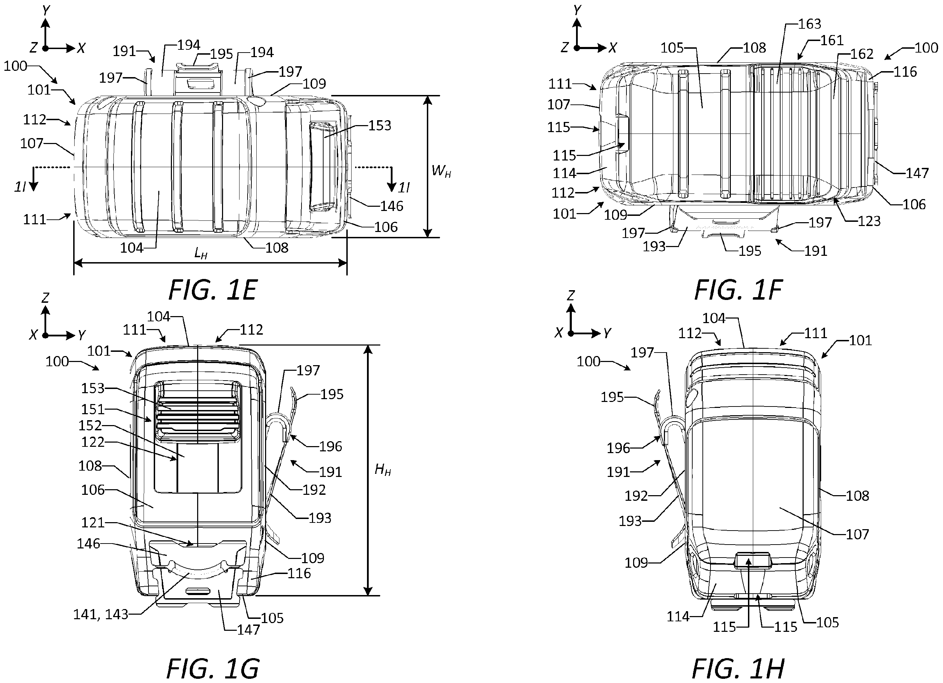

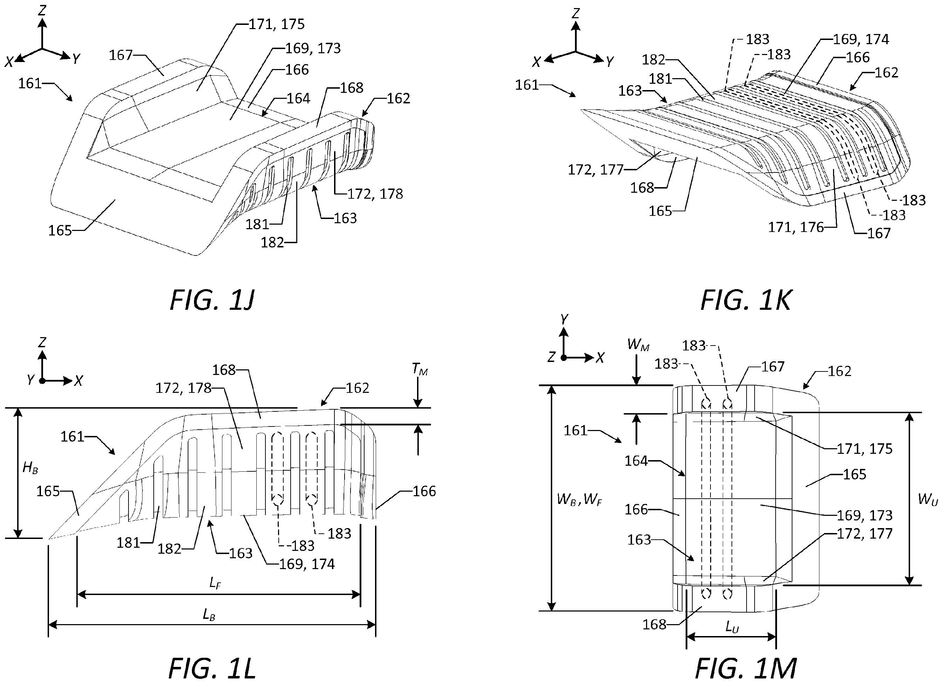

FIGS. 1A-1O illustrate a tape measure 100 (which also may be referred to as a "linear measurement device" or a "measurement device") as well as individual components and features of the tape measure 100 in accordance with one or more example embodiments of the disclosure. The tape measure 100 may be used in various applications to measure linear distances. As described below, the tape measure 100 may include a finger brake configured to control extension and retraction of a tape blade of the tape measure 100. In particular, the finger brake may be configured to allow a user to maintain the tape blade in a desired extended position and to brake the rewinding and retraction of the tape blade into a housing of the tape measure 100. As compared to certain existing tape measures, embodiments of the tape measure 100 may allow the user to control extension and retraction of the tape blade while holding the tape measure 100 in an ergonomically preferred manner, even when the tape measure 100 includes a relatively large housing, may prevent or at least reduce the likelihood of the user's finger being cut or pinched by the tape blade or an end hook while the tape blade is rewound and retracted, may prevent or at least reduce the likelihood of foreign contaminants entering into and accumulating within the housing of the tape measure 100, may allow the user to have a desired tactile feel when braking the rewinding and retraction of the tape blade, and/or may provide the finger brake in a compact configuration that conforms to the overall shape of the tape measure 100 and does not require an undesirably large or clumsy housing.

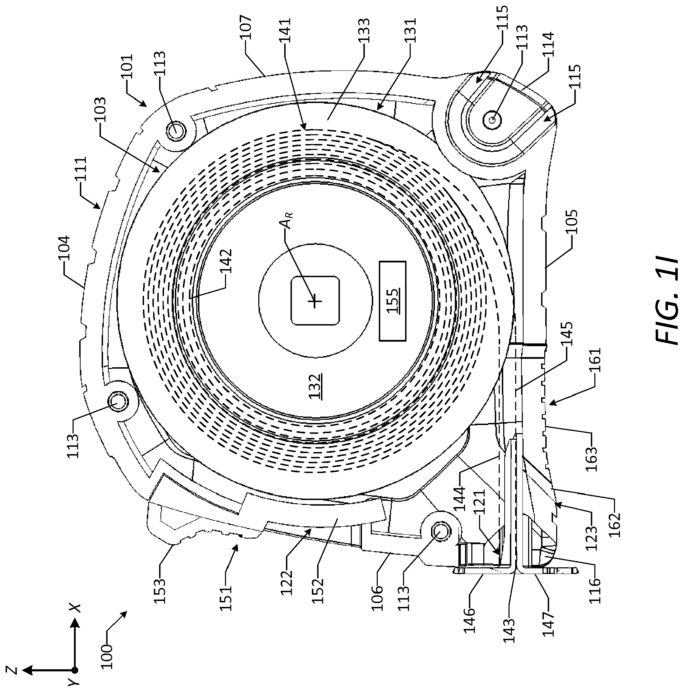

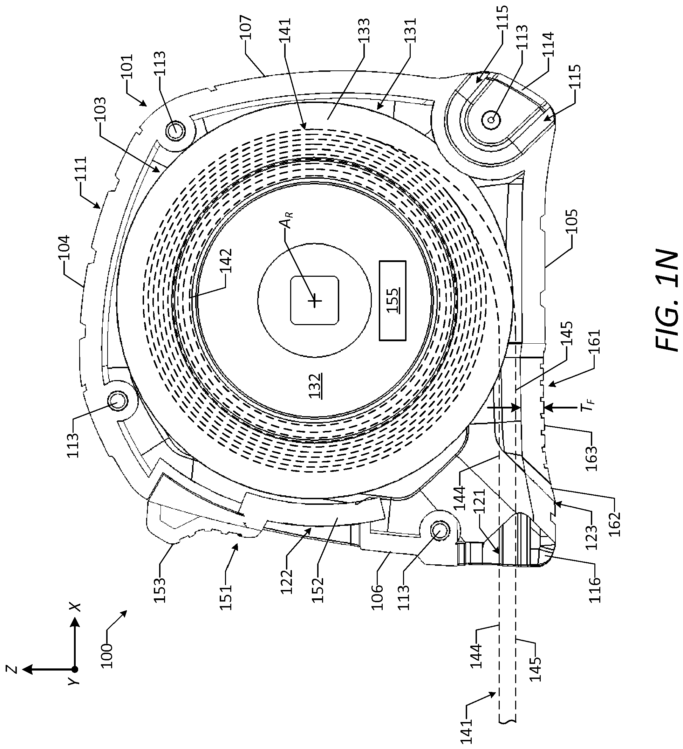

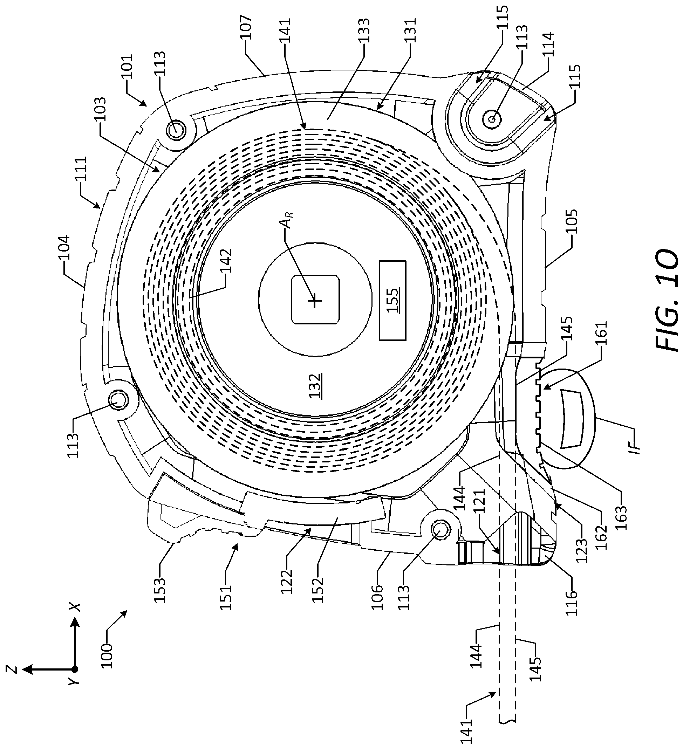

As shown in FIGS. 1A-1O, the example tape measure 100 may include a housing 101, a reel 131, and a tape blade 141 (illustrated via dashed lines in FIGS. 1I, 1N, and 1O). The housing 101 may include and define an interior space 103, and the reel 131 may be rotatably supported within the interior space 103. The tape blade 141 may be at least partially wound on the reel 131 within the interior space 103, as shown in FIG. 1I. During use of the tape measure 100, a portion of the tape blade 141 may be unwound from the reel 131 and extended out of the housing 101 to allow a user to measure a linear distance. After taking a measurement, the extended portion of the tape blade 141 may be rewound onto the reel 131 and retracted into the housing 101. In this manner, the tape blade 141 may be stored within the interior space 103 and protected by the housing 101 when the tape measure 100 is not being used.

The housing 101 may be a substantially closed structure including a plurality of walls that surround and define the interior space 103. In particular, the housing 101 may include a top wall 104, a bottom wall 105, a front wall 106, a back wall 107, a first sidewall 108, and a second sidewall 109, as shown. Alternatively, one or more of the top wall 104, bottom wall 105, front wall 106, and back wall 107 may be combined into a single wall, such as one or more curved combined walls. The walls 104, 105, 106, 107, 108, 109 of the housing 101 may be arranged and contoured such that the housing 101 has an overall shape that is easily grasped and held by a user during use of the tape measure 100. It will be understood that the illustrated embodiment of the tape measure 100 shows merely one example of the housing 101 and the arrangement and contour of the walls 104, 105, 106, 107, 108, 109 thereof, and that other suitable arrangements and contours may be used in other example embodiments. As shown, the housing 101 may have an overall length *L_{H}*, an overall width *W_{H},* and an overall height *H_{H}.* The housing 101 may include multiple components assembled to one another, and each of the walls 104, 105, 106, 107, 108, 109 of the housing 101 may be formed by one or more of the components.

In certain example embodiments, as shown, the housing 101 may include a first housing portion 111 and a second housing portion 112 attached to one another. The first housing portion 111 may form a portion of each of the top wall 104, the bottom wall 105, the front wall 106, and the back wall 107, as well as an entirety of the first sidewall 108. In a similar manner, the second housing portion 112 may form a portion of each of the top wall 104, the bottom wall 105, the front wall 106, and the back wall 107, as well as an entirety of the second sidewall 109. The first housing portion 111 and the second housing portion 112 may be attached to one another via one or more fasteners 113, as shown. The fasteners 113 may include one or more screws, bolts, rivets, clips, or other types of mechanical fasteners. Alternatively, the first housing portion 111 and the second housing portion 112 may be attached to one another by welding, soldering, one or more adhesives, or other suitable means of attachment.

The housing 101 also may include a capture bracket 114 that spans the width *W_{H}* of the housing 101 and extends over respective portions of the first housing portion 111 and the second housing portion 112. As shown, the capture bracket 114 may be attached to the first housing portion 111 and the second housing portion 112 by one or more of the fasteners 113. The capture bracket 114 may further prevent separation of the first housing portion 111 and the second housing portion 112 and also may absorb certain impact forces, such as those that may be experienced if the tape measure 100 is dropped or hit with an object, which otherwise might compromise the integrity of the attachment between the first housing portion 111 and the second housing portion 112. In certain example embodiments, the capture bracket 114 may be positioned along a bottom-back corner of the housing 101, such as between the back wall 107 and the bottom wall 105, as shown. However, other suitable positions of the capture bracket 114 may be used. As shown in FIG. 1I, the capture bracket 114, the first housing portion 111, and the second housing portion 112 may define a lanyard opening 115 of the housing 101. The lanyard opening 115 may be configured to allow a lanyard or other similar member to pass therethrough and be attached to the housing 101. In certain example embodiments, as shown, the lanyard opening 115 may be substantially U-shaped, with one end positioned along the bottom wall 105 and another end positioned along the back wall 107 of the housing 101, although other suitable shapes and positions of the lanyard opening 115 may be used.

The housing 101 also may include a dampener 116 that spans the width *W_{H}* of the housing 101 and extends over respective portions of the first housing portion 111 and the second housing portion 112. The dampener 116 may be attached to the first housing portion 111 and the second housing portion 112 by welding, soldering, one or more fasteners, one or more adhesives, or other suitable means of attachment. In certain example embodiments, the dampener 116 may further prevent separation of the first housing portion 111 and the second housing portion 112 and also may absorb certain impact forces, such as those that may be experienced when the tape blade 141 is retracted into the housing 101 or those that may be experienced if the tape measure 100 is dropped or hit with an object. In certain example embodiments, the dampener 116 may be positioned along a bottom-front corner of the housing 101, between the front wall 106 and the bottom wall 105, as shown in FIG. 1A, although other suitable positions of the dampener 116 may be used.

As shown, the housing 101 may include one or more openings defined in the housing 101 and in communication with the interior space 103. In particular, the housing 101 may include a tape opening 121 defined therein and in communication with the interior space 103. The tape opening 121 may be configured to allow the tape blade 141 to pass therethrough. In this manner, during use of the tape measure 100, a portion of the tape blade 141 may be extended out of the housing 101 and subsequently retracted into the housing 101 through the tape opening 121. In certain example embodiments, the tape opening 121 may be defined in the front wall 106 near the bottom-front corner of the housing 101, as shown in FIG. 1A, although other suitable locations of the tape opening 121 may be used. In certain example embodiments, as shown, the tape opening 121 may be defined by a portion of the first housing portion 111, a portion of the second housing portion 112, and a portion of the dampener 116.

The housing 101 also may include a lock opening 122 defined therein and in communication with the interior space 103. The lock opening 122 may be configured to allow a portion of a tape lock, example embodiments of which are described in detail below, to be positioned therein and/or to extend therethrough. In this manner, during use of the tape measure 100, the tape lock may be actuated by a user from outside of the housing 101. In certain example embodiments, the lock opening 122 may be defined in the front wall 106 of the housing 101, as shown in FIG. 1A, although other suitable locations of the lock opening 122 may be used. In certain example embodiments, as shown, the lock opening 122 may be defined by a portion of the first housing portion 111 and a portion of the second housing portion 112.

The housing 101 also may include a brake opening 123 defined therein and in communication with the interior space 103. The brake opening 123 may be configured to allow a portion of a finger brake, example embodiments of which are described in detail below, to be positioned therein and/or to extend therethrough. In this manner, during use of the tape measure 100, the finger brake may be actuated by a user from outside of the housing 101. In certain example embodiments, the brake opening 123 may be defined in the bottom wall 105 near the bottom-front corner of the housing 101, as shown in FIG. 1A, although other suitable locations of the brake opening 123 may be used. In certain example embodiments, as shown, the brake opening 123 may be defined by a portion of the first housing portion 111 and a portion of the second housing portion 112. As shown, the tape opening 121, the lock opening 122, and the brake opening 123 may be separate and spaced apart from one another. In certain example embodiments, the tape opening 121, the lock opening 122, and the brake opening 123 may be the only openings defined in the housing 101 and in communication with the interior space 103. In other words, the housing 101 may be a closed structure except for the tape opening 121, the lock opening 122, and the brake opening 123.

As described above, the reel 131 may be rotatably supported within the interior space 103 of the housing 101 and may support the tape blade 141 wound thereon. In this manner, the reel 131 may rotate with respect to the housing 101 about a rotational axis *A_{R}* as the tape blade 141 is extended out of the housing 101 and as the tape blade 141 is retracted into the housing 101. As shown in FIG. 1I, the reel 131 may include a hub 132 and a pair of opposing flanges 133 extending from the hub 132 and spaced apart from one another. The hub 132 may be configured to allow the tape blade 141 to be wound thereon, and the flanges 133 may be configured to receive the wound portion of the tape blade 141 therebetween. In this manner, the flanges 133 may prevent the wound portion of the tape blade 141 from shifting laterally off of the hub 132. The flanges 133 also may be configured to guide the tape blade 141 from the hub 132 to the tape opening 121 as the tape blade 141 is extended out of the housing 101, and to guide the tape blade 141 from the tape opening 121 to the hub 132 as the tape blade 141 is retracted into the housing 101. In certain example embodiments, as shown, the hub 132 may have a cylindrical shape and the flanges 133 may have a circular disc shape, although other suitable shapes of the hub 132 and the flanges 133 may be used.

As described above, the tape blade 141 may be at least partially wound on the reel 131 within the interior space 103 of the housing 101. The tape blade 141 may be an elongated, ribbon-shaped member formed of a flexible material. In this manner, the tape blade 141 may be wound on the reel 131 in a coiled configuration within the housing 101, although a portion of the tape blade 141 may be extended out of the housing 101 and assume a substantially straight configuration during use of the tape measure 100. In certain example embodiments, the tape blade 141 may be formed of a metal, such as steel. In other example embodiments, the tape blade 141 may be formed of a plastic, fiberglass, composite, or other suitable material that is able to assume the coiled configuration and the substantially straight configuration. As shown, the tape blade 141 may include a proximal end 142 that is fixedly attached to the hub 132 of the reel 131, and an opposite distal end 143 that may be extended out of the housing 101 during use of the tape measure 100. The tape blade 141 also may include a top surface 144 and an opposite bottom surface 145 each extending along the length of the tape blade 141 from the proximal end 142 to the distal end 143. In certain example embodiments, the tape blade 141 may have a substantially concave-convex profile, which may provide a desired degree of rigidity when a portion of the tape blade 141 is extended out of the housing 101. In particular, the top surface 144 of the tape blade 141 may have a substantially concave shape, and the bottom surface 145 of the tape blade 141 may have a substantially convex shape. Measurement indicia may be provided on the top surface 144 and/or the bottom surface 145 of the tape blade 141 to allow a user to measure linear distances with the tape blade 141. In certain example embodiments, the tape blade 141 may include one or more coatings applied along the top surface 144 and/or the bottom surface 145 of the tape blade 141. Such coatings may be configured to inhibit wear of the tape blade 141 due to its engagement with other components of the tape measure 100 or other objects and/or to preserve the legibility of the measurement indicia.

The tape measure 100 may include one or more end hooks positioned at the distal end 143 of the tape blade 141 and configured to facilitate temporary attachment of the tape blade 141 to an object during use of the tape measure 100. In certain example embodiments, as shown in FIG. 1A, the tape measure 100 may include a top end hook 146 and a bottom end hook 147 each positioned at the distal end 143 of the tape blade 141. The top end hook 146 may extend along the top surface 144 of the tape blade 141 and upwardly away from the distal end 143 thereof. The bottom end hook 147 may extend along the bottom surface 145 of the tape blade 141 and downwardly away from the distal end 143 thereof. In addition to facilitating temporary attachment of the tape blade 141 to an object, the end hooks 146, 147 also may be configured to prevent the tape blade 141 from being completely rewound within the housing 101. In particular, the end hooks 146, 147 may be configured to engage the front wall 106 of the housing 101 when the tape blade 141 is in a fully retracted position, as shown in FIG. 1A. In this manner, during use of the tape measure 100, the end hooks 146, 147 may be accessed (e.g., grasped) by a user to facilitate extension of a portion of the tape blade 141 out of the housing 101. In certain example embodiments, the end hooks 146, 147 may be separately formed from and attached to the tape blade 141. In other example embodiments, the end hooks 146, 147 may be integrally formed with the tape blade 141. Although the illustrated embodiment includes both the top end hook 146 and the bottom end hook 147, other example embodiments may include only the top end hook 146 or only the bottom end hook 147.

As described above, during use of the tape measure 100, a portion of the tape blade 141 may be unwound from the reel 131 and extended out of the housing 101 through the tape opening 121 and subsequently rewound onto the reel 131 and retracted into the housing 101 through the tape opening 121. As shown in FIG. 1A, the tape measure 100 may include a tape lock 151 positioned at least partially within and extending through the lock opening 122 of the housing 101 and configured to selectively maintain the tape blade 141 in a desired extended position. The tape lock 151 may be movable relative to the housing 101 between a released position (which also may be referred to as an "unlocked position") in which the tape blade 141 may be extended out of or retracted into the housing 101, and an engaged position (which also may be referred to as a "locked position") in which the extended position of the tape blade 141 is maintained by the tape lock 151. In particular, the tape lock 151 may be configured to slide relative to the housing 101 between the released position and the engaged position. As shown in FIG. 1I, the tape lock 151 may include an engagement finger 152 positioned at least partially within the housing 101, and an actuator button 153 positioned at least partially outside of the housing 101. When the tape lock 151 is in the released position, the engagement finger 152 may be spaced apart from the tape blade 141, as shown in FIG. 1I. When the tape lock 151 is in the engaged position, the engagement finger 152 may engage the top surface 144 of a portion of the tape blade 141 positioned within the housing 101 such that the tape blade 141 is maintained in a desired extended position. In certain example embodiments, as shown, the actuator button 153 may be directly attached to the engagement finger 152. In other example embodiments, the actuator button 153 may be indirectly attached to or in operable communication with the engagement finger 152 via one or more intermediate components.

The tape measure 100 also may include a retraction mechanism 155 (which also may be referred to as a "rewind mechanism" and is illustrated schematically in the figures) configured to automatically retract an extended portion of the tape blade 141 into the housing 101 and rewind the tape blade 141 onto the reel 131. In particular, the retraction mechanism 155 may be configured to retract and rewind the tape blade 141 when the tape lock 151 is in the released position and the tape blade 141 is not prohibitively restrained by a user or an object. In certain example embodiments, the retraction mechanism 155 may be positioned at least partially within the hub 132 of the reel 131, as shown. In other example embodiments, the retraction mechanism 155 may be positioned adjacent to the reel 131. The retraction mechanism 155 may be configured to bias the reel 131 to rotate about the rotational axis *A_{R}* such that the tape blade 141 is wound onto the reel 131. In certain example embodiments, the retraction mechanism 155 may include a spring, such as a flat spring, a leaf spring, or a coil spring, that is at least partially fixed relative to the housing 101 or the reel 131. The spring may be configured to store energy as the tape blade 141 is unwound from the reel 131 and extended from the housing 101, and to release the stored energy to automatically retract the extended portion of the tape blade 141 into the housing 101 and rewind the tape blade 141 onto the reel 131 when the tape lock 151 is in the released position and the tape blade 141 is not prohibitively restrained by a user or an object. In other example embodiments, the retraction mechanism 155 may include various other components configured to automatically retract and rewind the tape blade 141.

As shown, the tape measure 100 may include a finger brake 161 (which also may be referred to as a "flexible finger brake") positioned about the brake opening 123. In certain example embodiments, the finger brake 161 may be positioned at least partially within the brake opening 123 and may extend at least partially through the brake opening 123, as shown. The finger brake 161 may be configured to selectively maintain the tape blade 141 in a desired extended position and to selectively brake (*i*.*e*., slow down the speed of) the rewinding and retraction of the tape blade 141. In particular, during use of the tape measure 100, a user may press a portion of the finger brake 161 with the user's index finger to indirectly apply pressure to the bottom surface 145 of a portion of the tape blade 141 positioned within the housing 101. In this manner, the user may apply pressure to maintain the tape blade 141 in a desired extended position or to brake the rewinding and retraction of the tape blade 141. In certain example embodiments, as shown, the finger brake 161 may completely cover the brake opening 123, such that no foreign contaminants may enter into the interior space 103 of the housing 101 through the brake opening 123.

The finger brake 161 may include a support frame 162 (which also may be referred to as a "carrier") and a flexible member 163 (which also may be referred to as a "flexible membrane" or a "membrane") attached to the support frame 162. As shown, the support frame 162 may extend along a periphery of the brake opening 123 and may be contoured to match the shape of the portions of the housing 101 that define the brake opening 123. The support frame 162 may include a frame opening 164 defined therein and extending from a top surface to a bottom surface of the support frame 162. In this manner, the support frame 162 may be formed as a generally ring-shaped structure. As shown, the support frame 162 may include multiple members attached to one another and extending around the frame opening 164. In particular, the support frame 162 may include a front member 165, a back member 166, a first side member 167, and a second side member 168 extending around the frame opening 164. The front member 165 and the back member 166 may be spaced apart from one another and the first side member 167 and the second side member 168 may be spaced apart from one another, respectively, to define the frame opening 164 therebetween. The support frame 162 may be formed of a rigid or substantially rigid material, such that the support frame 162 provides suitable support for the flexible member 163. In certain example embodiments, the support frame 162 may be formed of a rigid or substantially rigid plastic, such as acrylonitrile butadiene styrene (ABS) or an acrylonitrile butadiene styrene/polycarbonate (ABS/PC) blend. In other example embodiments, the support frame 162 may be formed of a rigid or substantially rigid metal, such as zinc or aluminum. Still other suitably rigid materials may be used to form the support frame 162 in other example embodiments.

The finger brake 161 may be fixedly attached to the housing 101 of the tape measure 100. In particular, the support frame 162 of the finger brake 161 may be fixedly attached to the housing 101, as shown, such that the support frame 162 does not move relative to the housing 101 during use of the finger brake 161. In certain example embodiments, the support frame 162 may be fixedly attached to the housing 101 by one or more adhesives applied along mating surfaces of the support frame 162 and the housing 101. In other example embodiments, the support frame 162 may be fixedly attached to the housing 101 by one or more fasteners, welding, soldering, or other suitable means of attachment. In still other example embodiments, the support frame 162 and/or the housing 101 may include one or more attachment protrusions, such as tabs or other contoured features, which are received within one or more mating attachment receptacles, such as slots or grooves, defined in the support frame 162 and/or the housing 101.

The flexible member 163 may extend over the frame opening 164 and over respective portions of the support frame 162, as shown. In this manner, the flexible member 163 may include an unsupported portion (*i*.*e*., the portion positioned over the frame opening 164) and multiple supported portions (*i*.*e*., the portions positioned over the respective members 165, 166, 167, 168 of the support frame 162). As shown, the flexible member 163 may include a base 169, a first sidewall 171, and a second sidewall 172. The base 169 may extend from the front member 165 to the back member 166 of the support frame 162. The first sidewall 171 may extend from the base 169 to the first side member 167 of the support frame 162 and from the front member 165 to the back member 166 of the support frame 162. In a similar manner, the second sidewall 172 may extend from the base 169 to the second side member 168 of the support frame 162 and from the front member 165 to the back member 166 of the support frame 162. The flexible member 163 may be formed of a flexible material, such that the unsupported portion of the flexible member 163 may be deflected or elastically deformed by a user. In certain example embodiments, the flexible member 163 may be formed of an elastomeric material, such as a thermoplastic rubber (TPR), natural rubber, silicone, or latex. Still other suitably flexible materials may be used to form the flexible member 163 in other example embodiments. In certain example embodiments, the flexible material of the flexible member 163 may have a durometer with the range of approximately 50 to 70 Shore A durometer, although softer or harder materials may be used in other example embodiments.

As shown, the base 169 of the flexible member 163 may include an inner surface 173 (which also may be referred to as a "top surface") and an opposite outer surface 174 (which also may be referred to as a "bottom surface"). In a similar manner, the first sidewall 171 may include an inner surface 175 and an outer surface 176, and the second side wall 172 may include an inner surface 177 and an outer surface 178. The surfaces of the base 169 and the sidewalls 171, 172 may be smooth or may be textured. In certain example embodiments, as shown, the inner surfaces 173, 175, 177 of the base 169 and the sidewalls 171, 172 may be smooth, and the outer surfaces 174, 176, 178 of the base 169 and the sidewalls 171, 172 may be textured. For example, the flexible member 163 may include one or more grooves 181 and one or more ridges 182 defined along the outer surfaces 174, 176, 178, although other suitable texturing features may be used in other example embodiments. The grooves 181 and the ridges 182 each may have an elongated shape and may extend in a direction transverse to the length of the flexible member 163, although other suitable shapes and orientations of the grooves 181 and the ridges 182 may be used in other example embodiments. The grooves 181 and the ridges 182, or other texturing features defined along the outer surfaces 174, 176, 178, may allow a user to easily engage and grip the flexible member 163 during use of the finger brake 161.

In certain example embodiments, one or more support members 183 may be positioned within the flexible member 163 to enhance the structural integrity of the flexible member 163 and inhibit tearing thereof. The material of the support members 183 may be more rigid than the material of the flexible member 163. In certain example embodiments, the support members 183 may be configured to deflect or elastically deform when the finger brake 161 is actuated by a user. In other example embodiments, the support members 183 may be formed of a rigid or substantially rigid material, such that the support members 183 do not deflect or elastically deform when the finger brake 161 is actuated by a user. The support members 183 may be formed as elongated ribs, as shown, although other suitable shapes of the support members 183 may be used. The support members 183 may be contoured to match the shape of respective portions of the flexible member 163 and may be positioned therein such that the support members 183 are spaced apart from the inner surfaces 173, 175, 177 and the outer surfaces 174, 176, 178 of the base 169 and the sidewalls 171, 172. In certain example embodiments, as shown, the support members 183 each may extend in a direction transverse to the length of the flexible member 163, although other suitable orientations of the support members 183 may be used in other example embodiments. The number and size of the support members 183 may be selected such that the support members 183 provide a desired degree of support to the flexible member 163 while still allowing a user to have a desired degree of tactile feel when braking the rewinding and retraction of the tape blade 141.

The support frame 162 and the flexible member 163 may be formed and fixedly attached to one another by a variety of methods. In certain example embodiments, the support frame 162 may be molded from a plastic, and the flexible member 163 may be overmolded onto the support frame 162. In such embodiments, the material chemistry of the flexible member 163 may be matched with the material of the support frame 162 to provide a chemical bond therebetween during the heated molding process. In other example embodiments, the support frame 162 may be molded from a plastic or cast from a metal, the flexible member 163 may be separately molded or otherwise formed, and the support frame 162 and the flexible member 163 then may be attached to one another. In such embodiments, the support frame 162 and the flexible member 163 may be fixedly attached to one another by one or more fasteners, one or more adhesives, chemical bonding, or other suitable means of attachment. In some example embodiments, the material of the support frame 162 may have a first color, and the material of the flexible member 163 may have a second color that is different than the first color. In this manner, the finger brake 161 may provide a color contrast between the support frame 162 and the flexible member 163, such that a user's attention is drawn to the finger brake 161 and the user intuitively is led to actuate the finger brake 161 by pressing the flexible member 163 and not the support frame 162.

The dimensions of the finger brake 161 may vary depending on the dimensions of the housing 101. As shown, the finger brake 161 may have an overall height *H_{B},* an overall length *L_{B},* and an overall width *W_{B}.* In certain example embodiments, the height *H_{B}* of the finger brake 161 may be within a range of between approximately 5% and approximately 25% of the height *H_{H}* of the housing 101. In certain example embodiments, the length *L_{B}* of the finger brake 161 may be within a range of between approximately 5% and approximately 50% of the length *L_{H}* of the housing 101. In certain example embodiments, the width *W_{B}* of the finger brake 161 may be within a range of between approximately 25% and approximately 100% of the width *W_{H}* of the housing 101.

The dimensions of the support frame 162 and the flexible member 163 of the finger brake 161 may vary depending on the dimensions of the finger brake 161 and the method by which the support frame 162 and the flexible member 163 are attached to one another. As shown, the members 165, 166, 167, 168 of the support frame 162 each may have a thickness *T_{M}* and a width *W_{M}.* In certain example embodiments, the thickness *T_{M}* of the members 165, 166, 167, 168 may be within a range of approximately 0.050 inches and approximately 0.130 inches, or within a range of approximately 0.080 inches and approximately 0.100 inches. In certain example embodiments, the width *W_{M}* of the members 165, 166, 167, 168 may be within a range of approximately 0.050 inches and approximately 0.130 inches, or within a range of approximately 0.080 inches and approximately 0.100 inches. Such ranges for the thickness *T_{M}* and the width *W_{M}* may ensure that the members 165, 166, 167, 168 provide an adequate substrate for elastomeric adhesion of the flexible member 163 to the support frame 162, and also may prevent or inhibit deflection of the support frame 162 during actuation of the finger brake 161.

As shown, the flexible member 163 may have a thickness *T_{F}*, a length *L_{F},* and a width *W_{F}.* In certain example embodiments, the thickness *T_{F}* of the flexible member 163 may be within a range of approximately 0.050 inches and 0.110 inches, or may be approximately 0.080 inches. Such ranges for the thickness *T_{F}* may ensure that a user has a desired tactile feel when braking the rewinding and retraction of the tape blade 141. However, a lesser thickness *T_{F}* of the flexible member 163 may be used to provide improved tactile feel, or a greater thickness *T_{F}* of the flexible member 163 may be used to provide improved durability of the flexible member 163. In certain example embodiments, the length *L_{F}* of the flexible member 163 may be within a range of approximately 80% and 100% of the length *L_{B}* of the finger brake 161. In certain example embodiments, the width *W_{F}* of the flexible member 163 may be within a range of approximately 80% and 100% of the width *W_{B}* of the finger brake 161. In certain example embodiments, the length *L_{F}* of the flexible member 163 may be within a range of between approximately 5% and approximately 50% of the length *L_{H}* of the housing 101. In certain example embodiments, the width *W_{F}* of the flexible member 163 may be within a range of between approximately 25 % and approximately 100% of the width *W_{H}* of the housing 101.

As described above, the flexible member 163 may extend over the frame opening 164 and over respective portions of the support frame 162, such that the flexible member 163 includes an unsupported portion (*i*.*e*., the portion positioned over the frame opening 164) and multiple supported portions (*i*.*e*., the portions positioned over the respective members 165, 166, 167, 168 of the support frame 162). As shown, the unsupported portion of the flexible member 163 may have a length *L_{U}* and a width *W_{U}.* In certain example embodiments, the length *L_{U}* of the unsupported portion of the flexible member 163 may be within a range of approximately 0.750 inches and approximately 1.500 inches, or within a range of approximately 1.000 inches and 1.250 inches. Such ranges for the length *L_{U}* may ensure that the unsupported portion of the flexible member 163 is able to accommodate the width of the index finger of a majority of users. In certain example embodiments, the length *L_{U}* of the unsupported portion of the flexible member 163 may be within a range of approximately 80% to approximately 100% of the length *L_{B}* of the finger brake 161. In certain example embodiments, the width *W_{U}* of the unsupported portion of the flexible member 163 may be within a range of approximately 80% to approximately 100% of the width *W_{B}* of the finger brake 161. Such ranges for the width *W_{U}* may ensure that the finger brake 161 may be easily accessed and actuated by both right-handed and left-handed users. As shown, the supported portions of the flexible member 163 may overlap the respective portions of the support frame 162. In certain example embodiments, the overlap may be within a range of approximately 0.040 inches to approximately 0.080 inches, or may be approximately 0.060 inches. Such ranges for the overlap may ensure long-term adhesion of the flexible member 163 to the support frame 162.

As described above, the support frame 162 of the finger brake 161 may be separately formed from and attached to the housing 101. In certain example embodiments, the support frame 162 instead may be integrally formed with one or more portions of the housing 101. For example, the support frame 162 may be integrally formed with the first housing portion 111 or the second housing portion 112. Alternatively, the support frame 162 may include two separate portions, one of which is integrally formed with the first housing portion 111, and the other of which is integrally formed with the second housing portion 112. In such embodiments, the flexible member 163 may be attached to both portions of the support frame 162 after the first housing portion 111 and the second housing portion 112 are attached to one another. Alternatively, the flexible member 163 also may include two separate portions, one of which is attached to the portion of the support frame 162 that is integrally formed with the first housing portion 111, and the other of which is attached to the portion of the support frame 162 that is integrally formed with the second housing portion 112. In such embodiments, the respective portions of the flexible member 163 may be attached to the respective portions of the support frame 162 before the first housing portion 111 and the second housing portion 112 are attached to one another. Additionally, in such embodiments, the two portions of the flexible member 163 may overlap one another or may abut one another.

As described above, the finger brake 161 may be used to control extension and retraction of the tape blade 141 of the tape measure 100. In particular, the finger brake 161 may be configured to allow a user to maintain the tape blade 141 in a desired extended position and to brake the retraction and rewinding of the tape blade 141 into the housing 101. During use of the finger brake 161, a user may move the flexible member 163 of the finger brake 161 from a released position (which also may be referred to as an "unbraked position"), as shown in FIG. 1N, to an engaged position (which also may be referred to as a "braked position"), as shown in FIG. 1O. In particular, the user may press the flexible member 163 with the user's index finger *IF* to deflect or elastically deform the flexible member 163 from the released position to the engaged position.

When the flexible member 163 is in the released position, the flexible member 163 may be spaced apart from the tape blade 141, as shown in FIG. 1N. In particular, when the flexible member 163 is in the released position, the inner surfaces 173, 175, 177 of the base 169 and the sidewalls 171, 172 of the flexible member 163 may be spaced apart from the bottom surface 145 of the tape blade 141. Additionally, when the flexible member 163 is in the released position, the support frame 162 may be spaced apart from the tape blade 141, as shown. In this manner, the tape blade 141 may be extended or retracted without interference from the finger brake 161 when the flexible member 163 is in the released position.

When the flexible member 163 is in the engaged position, the flexible member 163 may engage a portion of the tape blade 141 positioned within the interior space 103 of the housing 101, as shown in FIG. 1O. In particular, when the flexible member 163 is in the engaged position, one or more of the inner surfaces 173, 175, 177 of the base 169 and the sidewalls 171, 172 of the flexible member 163 may engage the bottom surface 145 of a portion of the tape blade 141 positioned within the interior space 103. Additionally, when the flexible member 163 is in the engaged position, the support frame 162 may be spaced apart from the tape blade 141, as shown. In this manner, the engagement between the flexible member 163 and the tape blade 141 may generate a frictional force that prevents or inhibits extension and retraction of the tape blade 141. When the flexible member 163 is in the engaged position, the top surface 144 of a portion of the tape blade 141 positioned within the tape opening 121 may engage an adjacent portion of the housing 101 defining the tape opening 121. In this manner, the engagement between the tape blade 141 and the housing 101 also may generate a frictional force that prevents or inhibits extension and retraction of the tape blade 141. Ultimately, the frictional forces generated when the flexible member 163 is in the engaged position may allow the user to maintain the tape blade 141 in a desired extended position or to brake the retraction and rewinding of the tape blade 141 into the housing 101.

In certain example embodiments, the tape measure 100 may include an intermediate member positioned between the flexible member 163 and the bottom surface 145 of the tape blade 141. The intermediate member may be formed as a thin sheet-like structure, although other suitable forms of the intermediate layer may be used. In certain example embodiments, the intermediate member may be formed of polytetrafluoroethylene (PTFE or TEFLON®), although other suitable materials may be used for the intermediate member in other example embodiments. The intermediate member may be useful when the tape measure 100 is used in environments with excessive abrasive grit. In particular, the intermediate member may protect the flexible member 163 from any grit that may enter the interior space 103 and also may protect the coatings applied to the tape blade 141. In this manner, the intermediate member may prevent or inhibit wear of the flexible member 163 and the coatings that otherwise might occur due to contact with the grit. The intermediate member also may be useful in providing a desired amount of frictional force generated during use of the finger brake 161. In particular, the material of the intermediate member may be selected to provide a frictional force that allows for desired braking of the tape blade 141 but does not result in undesired wear of the tape blade 141 or the coatings applied thereto. In certain example embodiments, the intermediate member may be attached to the support frame 162 and/or the flexible member 163 of the finger brake 161, such as by heat-staked thru-pins or other suitable means of attachment. In other example embodiments, the intermediate member may be attached to the housing 101. In still other example embodiments, the intermediate member may be trapped between one or more portions of the housing 101 and one or more portions of the finger brake 161.

As shown, the tape measure 100 may include a clip 191 (which also may be referred to as a "belt clip") attached to the housing 101 and configured to secure the tape measure 100 to a user's belt or a pocket or other feature of the user's clothing. In certain example embodiments, the clip 191 may be attached to the second sidewall 109 of the housing 101 by one or more fasteners 113, as shown, although other suitable positions of the clip 191 and other suitable means of attachment may be used in other example embodiments. The clip 191 may include a first leg 192 (which also may be referred to as an "inner leg") and a second leg 193 (which also may be referred to as an "outer leg") attached to one another by one or more living hinges 194. The first leg 192 and the second leg 193 may be biased toward one another by the living hinges 194, but may be selectively moved away from one another to a spaced apart position to allow the user's belt or other feature to be inserted therebetween. As shown, the clip 191 also may include an actuator lever 195 that may be actuated to move the legs 192, 193 to the spaced apart position. The actuator lever 195 may be attached to the second leg 193 and positioned between the living hinges 194, as shown. In certain example embodiments, as shown, the first leg 192, the second leg 193, the living hinges 194, and the actuator lever 195 may be integrally formed with one another from a single piece of material. In certain example embodiments, the clip 191 may be formed of a metal, such as steel. In other example embodiments, the clip 191 may be formed of a plastic or other suitable material.

The tape measure 100 also may include a clip guard 196 that is attached to the clip 191 and/or the housing 101. As shown, the clip guard 196 may be positioned between the first leg 192 and the second leg 193 and along respective inner surfaces of the living hinges 194. Additionally, end portions 197 of the clip guard 196 may extend over one or more edges of the living hinges 194, as shown. The end portions 197 may be rounded, curved, or otherwise contoured to reduce or eliminate any sharp edges along the end portions 197. In this manner, when the tape measure 100 is attached to the user's belt or other feature, the clip guard 196 may be positioned between the living hinges 194 and the user's belt or other feature. As a result, the clip guard 197 may protect the user's belt or other feature from experiencing wear that otherwise might occur due to contact with the living hinges 194, in particular any sharp edges thereof. In certain example embodiments, the clip guard 196 may formed of a plastic, although the clip guard 196 may be formed of other suitable materials in other example embodiments.

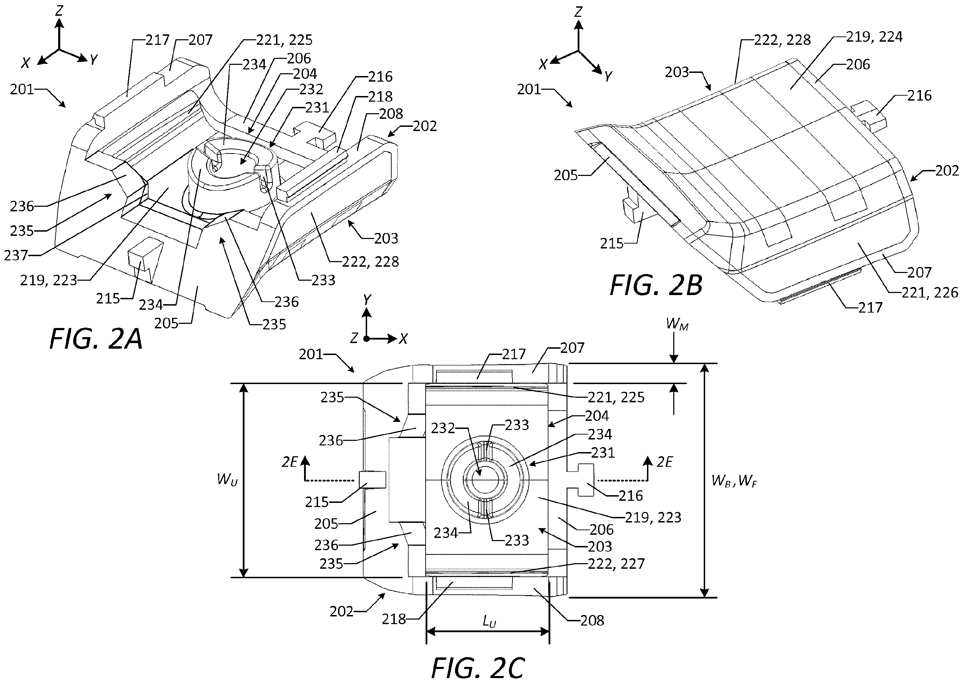

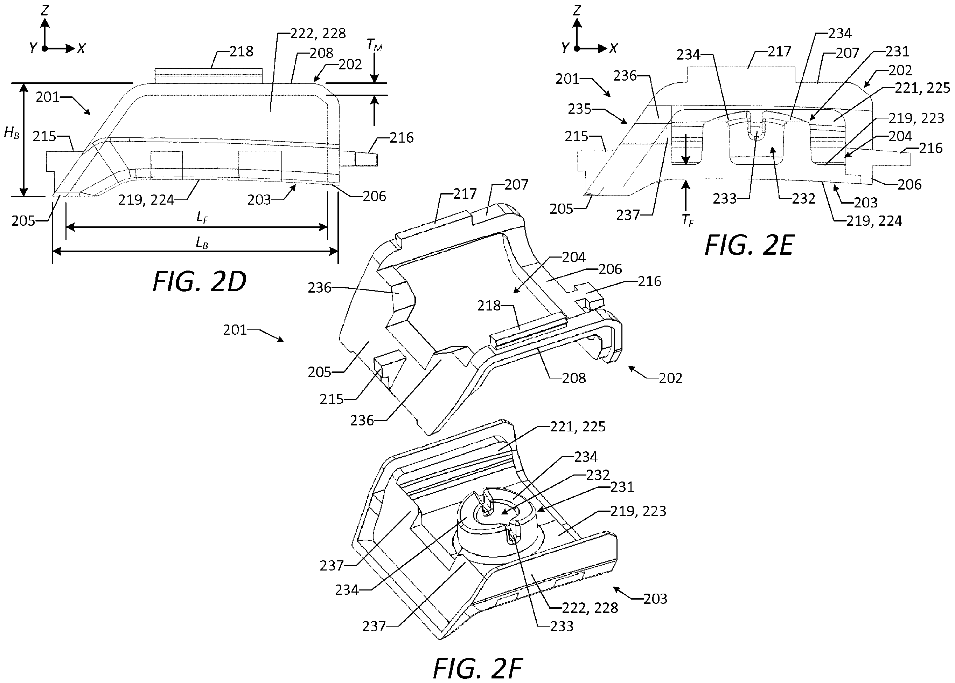

FIGS. 2A-2F illustrate a finger brake 201 (which also may be referred to as a "flexible finger brake") as well as individual components and features of the finger brake 201 in accordance with one or more embodiments of the disclosure. The finger brake 201 may be used as a part of the tape measure 100, instead of the finger brake 161 described above. It will be appreciated that the finger brake 201 may include certain components and features similar to those of the finger brake 161, and that the finger brake 201 may be used in a similar manner. Certain differences between the finger brake 201 and the finger brake 161 are described below.

The finger brake 201 may be positioned about the brake opening 123 of the housing 101. In certain example embodiments, the finger brake 201 may be positioned at least partially within the brake opening 123 and may extend at least partially through the brake opening 123. The finger brake 201 may be configured to selectively maintain the tape blade 141 in a desired extended position and to selectively brake (*i*.*e*., slow down the speed of) the rewinding and retraction of the tape blade 141. In particular, during use of the tape measure 100, a user may press a portion of the finger brake 201 with the user's index finger to indirectly apply pressure to the bottom surface 145 of a portion of the tape blade 141 positioned within the housing 101. In this manner, the user may apply pressure to maintain the tape blade 141 in a desired extended position or to brake the rewinding and retraction of the tape blade 141. In certain example embodiments, the finger brake 201 may completely cover the brake opening 123, such that no foreign contaminants may enter into the interior space 103 of the housing 101 through the brake opening 123.

As shown, the finger brake 201 may include a support frame 202 (which also may be referred to as a "carrier") and a flexible member 203 (which also may be referred to as a "flexible membrane" or a "membrane") attached to the support frame 202. The support frame 202 may extend along a periphery of the brake opening 123 and may be contoured to match the shape of the portions of the housing 101 that define the brake opening 123. The support frame 202 may include a frame opening 204 defined therein and extending from a top surface to a bottom surface of the support frame 202. In this manner, the support frame 202 may be formed as a generally ring-shaped structure. As shown, the support frame 202 may include multiple members attached to one another and extending around the frame opening 204. In particular, the support frame 202 may include a front member 205, a back member 206, a first side member 207, and a second side member 208 extending around the frame opening 204. The front member 205 and the back member 206 may be spaced apart from one another and the first side member 207 and the second side member 208 may be spaced apart from one another, respectively, to define the frame opening 204 therebetween. The support frame 202 may be formed of a rigid or substantially rigid material, such that the support frame 202 provides suitable support for the flexible member 203. In certain example embodiments, the support frame 202 may be formed of a rigid or substantially rigid plastic, such as acrylonitrile butadiene styrene (ABS) or an acrylonitrile butadiene styrene/polycarbonate (ABS/PC) blend. In other example embodiments, the support frame 202 may be formed of a rigid or substantially rigid metal, such as zinc or aluminum. Still other suitably rigid materials may be used to form the support frame 202 in other example embodiments.

The finger brake 201 may be fixedly attached to the housing 101 of the tape measure 100. In particular, the support frame 202 of the finger brake 201 may be fixedly attached to the housing 101, such that the support frame 202 does not move relative to the housing 101 during use of the finger brake 201. In certain example embodiments, the support frame 202 may be fixedly attached to the housing 101 by one or more adhesives applied along mating surfaces of the support frame 202 and the housing 101. In other example embodiments, the support frame 202 may be fixedly attached to the housing 101 by one or more fasteners, welding, soldering, or other suitable means of attachment. In still other example embodiments, the support frame 202 and/or the housing 101 may include one or more attachment protrusions, such as tabs or other contoured features, which are received within one or more mating attachment receptacles, such as slots or grooves, defined in the support frame 202 and/or the housing 101. For example, as shown, the support frame 202 may include a front protrusion 215, a back protrusion 216, a first side protrusion 217, and a second side protrusion 218 each configured to be received within a respective mating receptacle defined in the housing 101.

The front protrusion 215 may be fixedly attached to the front member 205 of the support frame 202 and may extend forwardly away from the front member 205. The front protrusion 215 may be formed as a tab having an inverted L-shape, as shown, and the mating receptacle of the housing 101 may have a corresponding shape. The back protrusion 216 may be fixedly attached to the back member 206 of the support frame 202 and may extend backwardly away from the back member 206. The back protrusion 216 may be formed as a tab having a T-shape, as shown, and the mating receptacle of the housing 101 may have a corresponding shape. The first side protrusion 217 may be fixedly attached to the first side member 207 of the support frame 202 and may extend upwardly away from the first side member 207. The first side protrusion 217 may be formed as a tab having an elongated shape and a snap-fit contour, as shown, and the mating receptacle of the housing 101 may have a corresponding shape such that the first side protrusion 217 may be snap-fit therein. In a similar manner, the second side protrusion 218 may be fixedly attached to the second side member 208 of the support frame 202 and may extend upwardly away from the second side member 208. The second side protrusion 218 may be formed as a tab having an elongated shape and a snap-fit contour, as shown, and the mating receptacle of the housing 101 may have a corresponding shape such that the second side protrusion 218 may be snap-fit therein. In certain example embodiments, as shown, the protrusions 215, 216, 217, 218 may be integrally formed with the members 205, 206, 207, 208. In other example embodiments, the protrusions 215, 216, 217, 218 may be separately formed and fixedly attached to the members 205, 206, 207, 208. The engagement between the protrusions 215, 216, 217, 218 and the mating receptacles of the housing 101 may ensure that the support frame 202 is restrained from movement in all directions with respect to the housing 101. Additionally, the protrusions 215, 216, 217, 218 may resist separation of the support frame 202 from the housing 101 when the tape measure 100 is dropped or hit with an object, and also may distribute loads applied to the finger brake 201 when the finger brake 201 is actuated by a user.

The flexible member 203 may extend over the frame opening 204 and over respective portions of the support frame 202, as shown. In this manner, the flexible member 203 may include an unsupported portion (*i*.*e*., the portion positioned over the frame opening 204) and multiple supported portions (*i*.*e*., the portions positioned over the respective members 205, 206, 207, 208 of the support frame 202). As shown, the flexible member 203 may include a base 219, a first sidewall 221, and a second sidewall 222. The base 219 may extend from the front member 205 to the back member 206 of the support frame 202. The first sidewall 221 may extend from the base 219 to the first side member 207 of the support frame 202 and from the front member 205 to the back member 206 of the support frame 202. In a similar manner, the second sidewall 222 may extend from the base 219 to the second side member 208 of the support frame 202 and from the front member 205 to the back member 206 of the support frame 202. The flexible member 203 may be formed of a flexible material, such that the unsupported portion of the flexible member 203 may be deflected or elastically deformed by a user. In certain example embodiments, the flexible member 203 may be formed of an elastomeric material, such as a thermoplastic rubber (TPR), natural rubber, silicone, or latex. Still other suitably flexible materials may be used to form the flexible member 203 in other example embodiments. In certain example embodiments, the flexible material of the flexible member 203 may have a durometer with the range of approximately 50 to 70 Shore A durometer, although softer or harder materials may be used in other example embodiments.

As shown, the base 219 of the flexible member 203 may include an inner surface 223 (which also may be referred to as a "top surface") and an opposite outer surface 224 (which also may be referred to as a "bottom surface"). In a similar manner, the first sidewall 221 may include an inner surface 225 and an outer surface 226, and the second side wall 222 may include an inner surface 227 and an outer surface 228. The surfaces of the base 219 and the sidewalls 221, 222 may be smooth or may be textured. In certain example embodiments, the inner surfaces 223, 225, 227 of the base 219 and the sidewalls 221, 222 may be smooth, and the outer surfaces 224, 226, 228 of the base 219 and the sidewalls 221, 222 may be smooth. In other example embodiments, the inner surfaces 223, 225, 227 of the base 219 and the sidewalls 221, 222 may be smooth, and the outer surfaces 224, 226, 228 of the base 219 and the sidewalls 221, 222 may be textured. In still other example embodiments, the inner surfaces 223, 225, 227 of the base 219 and the sidewalls 221, 222 may be textured, and the outer surfaces 224, 226, 228 of the base 219 and the sidewalls 221, 222 may be smooth.

The flexible member 203 may include one or more protrusions positioned on one or more of the inner surfaces 223, 225, 227 of the base 219 and the sidewalls 221, 222. For example, as shown, the flexible member 203 may include an engagement protrusion 231 positioned on the inner surface 223 of the base 219 and extending upwardly therefrom. The engagement protrusion 231 may be configured to engage the bottom surface 145 of a portion of the tape blade 141 when the finger brake 201 is actuated by a user. In certain example embodiments, as shown, the engagement protrusion 231 may have a generally tubular shape defining a central opening 232 therein. The engagement protrusion 231 also may include one or more notches 233 defined therein and extending from the outer circumferential surface to the inner circumferential surface of the engagement protrusion 231, as shown. In certain example embodiments, as shown, one or more inner surfaces 234 (which also may be referred to as "top surfaces") of the engagement protrusion 231 may have a generally concave shape, which may be configured to match the generally convex shape of the bottom surface 145 of the tape blade 141. In other example embodiments, the engagement protrusion 231 and the inner surfaces 234 thereof may have other suitable shapes.

The support frame 202 and the flexible member 203 may be formed and fixedly attached to one another by a variety of methods. In certain example embodiments, the support frame 202 may be molded from a plastic, and the flexible member 203 may be overmolded onto the support frame 202. In such embodiments, the material chemistry of the flexible member 203 may be matched with the material of the support frame 202 to provide a chemical bond therebetween during the heated molding process. In other example embodiments, the support frame 202 may be molded from a plastic or cast from a metal, the flexible member 203 may be separately molded or otherwise formed, and the support frame 202 and the flexible member 203 then may be attached to one another. In such embodiments, the support frame 202 and the flexible member 203 may be fixedly attached to one another by one or more fasteners, one or more adhesives, chemical bonding, or other suitable means of attachment. In some example embodiments, the material of the support frame 202 may have a first color, and the material of the flexible member 203 may have a second color that is different than the first color. In this manner, the finger brake 201 may provide a color contrast between the support frame 202 and the flexible member 203, such that a user's attention is drawn to the finger brake 201 and the user intuitively is led to actuate the finger brake 201 by pressing the flexible member 203 and not the support frame 202.

The dimensions of the finger brake 201 may vary depending on the dimensions of the housing 101. As shown, the finger brake 201 may have an overall height *H_{B},* an overall length *L_{B},* and an overall width *W_{B}.* In certain example embodiments, the height *H_{B}* of the finger brake 201 may be within a range of between approximately 5% and approximately 25% of the height *H_{H}* of the housing 101. In certain example embodiments, the length *L_{B}* of the finger brake 201 may be within a range of between approximately 5% and approximately 50% of the length *L_{H}* of the housing 101. In certain example embodiments, the width *W_{B}* of the finger brake 201 may be within a range of between approximately 25% and approximately 100% of the width *W_{H}* of the housing 101.

The dimensions of the support frame 202 and the flexible member 203 of the finger brake 201 may vary depending on the dimensions of the finger brake 201 and the method by which the support frame 202 and the flexible member 203 are attached to one another. As shown, the members 205, 206, 207, 208 of the support frame 202 each may have a thickness *T_{M}* and a width *W_{M}.* In certain example embodiments, the thickness *T_{M}* of the members 205, 206, 207, 208 may be within a range of approximately 0.050 inches and approximately 0.130 inches, or within a range of approximately 0.080 inches and approximately 0.100 inches. In certain example embodiments, the width *W_{M}* of the members 205, 206, 207, 208 may be within a range of approximately 0.050 inches and approximately 0.130 inches, or within a range of approximately 0.080 inches and approximately 0.100 inches. Such ranges for the thickness *T_{M}* and the width *W_{M}* may ensure that the members 205, 206, 207, 208 provide an adequate substrate for elastomeric adhesion of the flexible member 203 to the support frame 202, and also may prevent or inhibit deflection of the support frame 202 during actuation of the finger brake 201.

As shown, the flexible member 203 may have a thickness *T_{F},* a length *L_{F},* and a width *W_{F}.* In certain example embodiments, the thickness *T_{F}* of the flexible member 203 may be within a range of approximately 0.050 inches and 0.110 inches, or may be approximately 0.080 inches. Such ranges for the thickness *T_{F}* may ensure that a user has a desired tactile feel when braking the rewinding and retraction of the tape blade 141. However, a lesser thickness *T_{F}* of the flexible member 203 may be used to provide improved tactile feel, or a greater thickness *T_{F}* of the flexible member 203 may be used to provide improved durability of the flexible member 203. In certain example embodiments, the length *L_{F}* of the flexible member 203 may be within a range of approximately 80% and 100% of the length *L_{B}* of the finger brake 201. In certain example embodiments, the width *W_{F}* of the flexible member 203 may be within a range of approximately 80% and 100% of the width *W_{B}* of the finger brake 201. In certain example embodiments, the length *L_{F}* of the flexible member 203 may be within a range of between approximately 5% and approximately 50% of the length *L_{H}* of the housing 101. In certain example embodiments, the width *W_{F}* of the flexible member 203 may be within a range of between approximately 25 % and approximately 100% of the width *W_{H}* of the housing 101.

As described above, the flexible member 203 may extend over the frame opening 204 and over respective portions of the support frame 202, such that the flexible member 203 includes an unsupported portion (*i*.*e*., the portion positioned over the frame opening 204) and multiple supported portions (*i*.*e*., the portions positioned over the respective members 205, 206, 207, 208 of the support frame 202). As shown, the unsupported portion of the flexible member 203 may have a length *L_{U}* and a width *W_{U}.* In certain example embodiments, the length *L_{U}* of the unsupported portion of the flexible member 203 may be within a range of approximately 0.750 inches and approximately 1.500 inches, or within a range of approximately 1.000 inches and 1.250 inches. Such ranges for the length *L_{U}* may ensure that the unsupported portion of the flexible member 203 is able to accommodate the width of the index finger of a majority of users. In certain example embodiments, the length *L_{U}* of the unsupported portion of the flexible member 203 may be within a range of approximately 80% to approximately 100% of the length *L_{B}* of the finger brake 201. In certain example embodiments, the width *W_{U}* of the unsupported portion of the flexible member 203 may be within a range of approximately 80% to approximately 100% of the width *W_{B}* of the finger brake 201. Such ranges for the width *W_{U}* may ensure that the finger brake 201 may be easily accessed and actuated by both right-handed and left-handed users. As shown, the supported portions of the flexible member 203 may overlap the respective portions of the support frame 202. In certain example embodiments, the overlap may be within a range of approximately 0.040 inches to approximately 0.080 inches, or may be approximately 0.060 inches. Such ranges for the overlap may ensure long-term adhesion of the flexible member 203 to the support frame 202.

As described above, the finger brake 201 may be used to control extension and retraction of the tape blade 141 of the tape measure 100. In particular, the finger brake 201 may be configured to allow a user to maintain the tape blade 141 in a desired extended position and to brake the retraction and rewinding of the tape blade 141 into the housing 101. During use of the finger brake 201, a user may move the flexible member 203 of the finger brake 201 from a released position (which also may be referred to as an "unbraked position") to an engaged position (which also may be referred to as a "braked position"). In particular, the user may press the flexible member 203 with the user's index finger to deflect or elastically deform the flexible member 203 from the released position to the engaged position.

When the flexible member 203 is in the released position, the flexible member 203 may be spaced apart from the tape blade 141. In particular, when the flexible member 203 is in the released position, the inner surfaces 223, 225, 227 of the base 219 and the sidewalls 221, 222 of the flexible member 203 may be spaced apart from the bottom surface 145 of the tape blade 141. Additionally, when the flexible member 203 is in the released position, the support frame 202 may be spaced apart from the tape blade 141. In this manner, the tape blade 141 may be extended or retracted without interference from the finger brake 201 when the flexible member 203 is in the released position.

When the flexible member 203 is in the engaged position, the flexible member 203 may engage a portion of the tape blade 141 positioned within the interior space 103 of the housing 101. In particular, when the flexible member 203 is in the engaged position, the inner surfaces 234 of the engagement protrusion 231 may engage the bottom surface 145 of a portion of the tape blade 141 positioned within the interior space 103. In certain example embodiments, when the flexible member 203 is in the engaged position, one or more of the inner surfaces 223, 225, 227 of the base 219 and the sidewalls 221, 222 of the flexible member 203 also may engage the bottom surface 145 of a portion of the tape blade 141 positioned within the interior space 103. Additionally, when the flexible member 203 is in the engaged position, the support frame 202 may be spaced apart from the tape blade 141. In this manner, the engagement between the flexible member 203 and the tape blade 141 may generate a frictional force that prevents or inhibits extension and retraction of the tape blade 141. When the flexible member 203 is in the engaged position, the top surface 144 of a portion of the tape blade 141 positioned within the tape opening 121 may engage an adjacent portion of the housing 101 defining the tape opening 121. In this manner, the engagement between the tape blade 141 and the housing 101 also may generate a frictional force that prevents or inhibits extension and retraction of the tape blade 141. Ultimately, the frictional forces generated when the flexible member 203 is in the engaged position may allow the user to maintain the tape blade 141 in a desired extended position or to brake the retraction and rewinding of the tape blade 141 into the housing 101.

As shown, the finger brake 201 may include one or more stop feet 235 configured to oppose locking forces applied to the tape blade 141 by the tape lock 151. In certain example embodiments, as shown, each stop foot 235 may include a first stop foot portion 236 defined by the support frame 202 and a second stop foot portion 237 defined by the flexible member 203. In other words, the first stop foot portion 236 may be a part of the support frame 202 and the second stop foot portion 237 may be a part of the flexible member 203. In this manner, the first stop foot portion 236 may be formed of a rigid or substantially rigid material, and the second stop foot portion 237 may be formed of a flexible material. In other example embodiments, each stop foot 235 may be defined entirely by the support frame 202 or entirely by the flexible member 203. As shown, the stop feet 235 may be positioned at or near the front end of the finger brake 201. In this manner, the stop feet 235 may be positioned below the engagement finger 152 when the tape lock 151 is in the engaged position, such that the stop feet 235 oppose the locking forces applied to the tape blade 141.

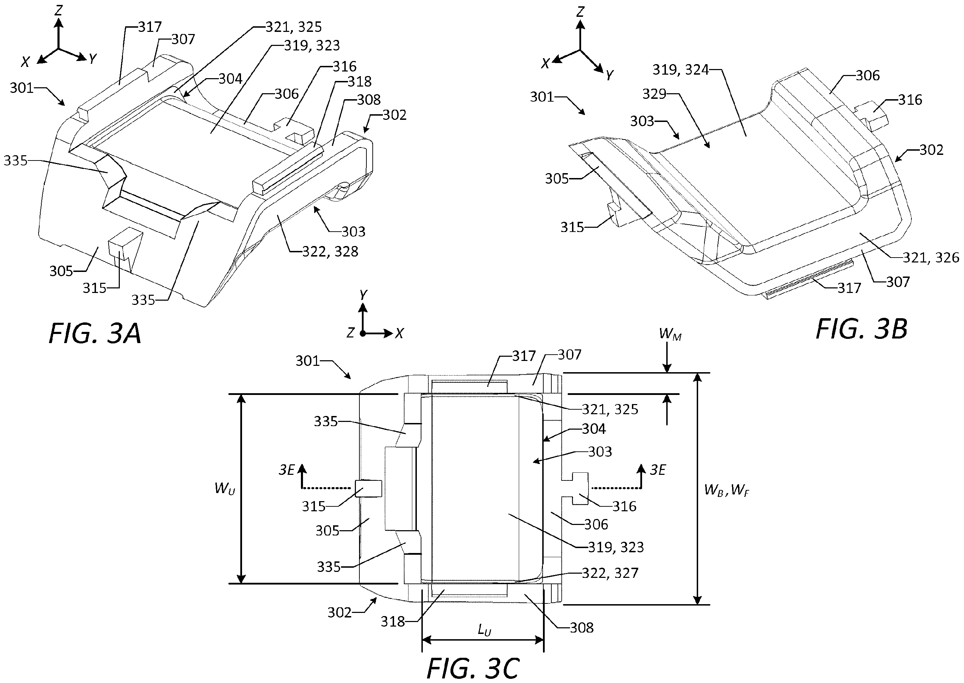

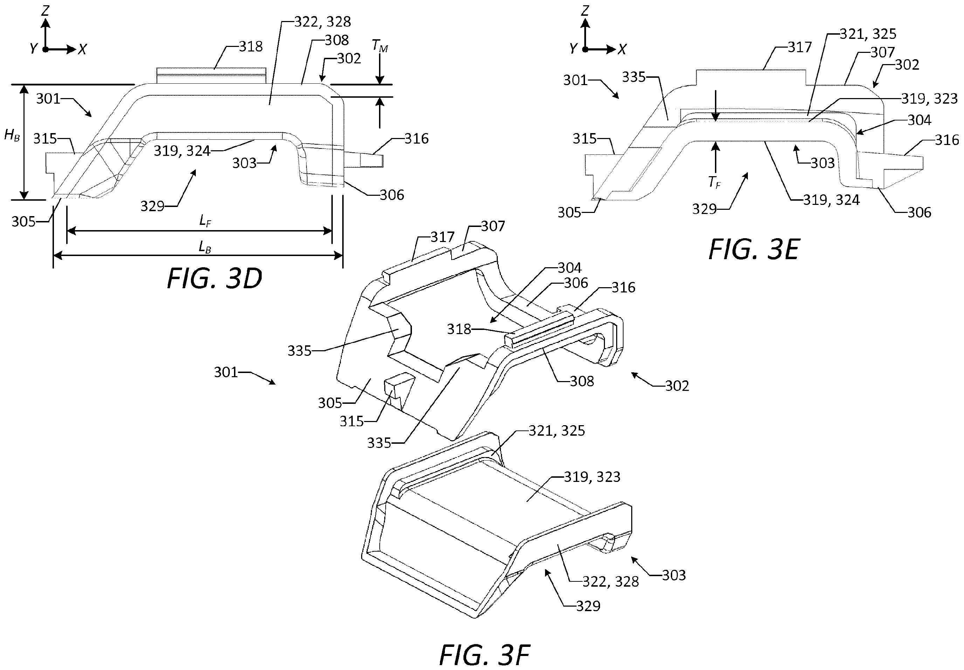

FIGS. 3A-3F illustrate a finger brake 301 (which also may be referred to as a "flexible finger brake") as well as individual components and features of the finger brake 301 in accordance with one or more embodiments of the disclosure. The finger brake 301 may be used as a part of the tape measure 100, instead of the finger brake 161 described above. It will be appreciated that the finger brake 301 may include certain components and features similar to those of the finger brake 161 and the finger brake 201, and that the finger brake 301 may be used in a similar manner. Certain differences between the finger brake 301 and the finger brakes 161, 201 are described below.

The finger brake 301 may be positioned about the brake opening 123 of the housing 101. In certain example embodiments, the finger brake 301 may be positioned at least partially within the brake opening 123 and may extend at least partially through the brake opening 123. The finger brake 301 may be configured to selectively maintain the tape blade 141 in a desired extended position and to selectively brake (*i*.*e*., slow down the speed of) the rewinding and retraction of the tape blade 141. In particular, during use of the tape measure 100, a user may press a portion of the finger brake 301 with the user's index finger to indirectly apply pressure to the bottom surface 145 of a portion of the tape blade 141 positioned within the housing 101. In this manner, the user may apply pressure to maintain the tape blade 141 in a desired extended position or to brake the rewinding and retraction of the tape blade 141. In certain example embodiments, the finger brake 301 may completely cover the brake opening 123, such that no foreign contaminants may enter into the interior space 103 of the housing 101 through the brake opening 123.

As shown, the finger brake 301 may include a support frame 302 (which also may be referred to as a "carrier") and a flexible member 303 (which also may be referred to as a "flexible membrane" or a "membrane") attached to the support frame 302. The support frame 302 may extend along a periphery of the brake opening 123 and may be contoured to match the shape of the portions of the housing 101 that define the brake opening 123. The support frame 302 may include a frame opening 304 defined therein and extending from a top surface to a bottom surface of the support frame 302. In this manner, the support frame 302 may be formed as a generally ring-shaped structure. As shown, the support frame 302 may include multiple members attached to one another and extending around the frame opening 304. In particular, the support frame 302 may include a front member 305, a back member 306, a first side member 307, and a second side member 308 extending around the frame opening 304. The front member 305 and the back member 306 may be spaced apart from one another and the first side member 307 and the second side member 308 may be spaced apart from one another, respectively, to define the frame opening 304 therebetween. The support frame 302 may be formed of a rigid or substantially rigid material, such that the support frame 302 provides suitable support for the flexible member 303. In certain example embodiments, the support frame 302 may be formed of a rigid or substantially rigid plastic, such as acrylonitrile butadiene styrene (ABS) or an acrylonitrile butadiene styrene/polycarbonate (ABS/PC) blend. In other example embodiments, the support frame 302 may be formed of a rigid or substantially rigid metal, such as zinc or aluminum. Still other suitably rigid materials may be used to form the support frame 302 in other example embodiments.

The finger brake 301 may be fixedly attached to the housing 101 of the tape measure 100. In particular, the support frame 302 of the finger brake 201 may be fixedly attached to the housing 101, such that the support frame 302 does not move relative to the housing 101 during use of the finger brake 301. In certain example embodiments, the support frame 302 may be fixedly attached to the housing 101 by one or more adhesives applied along mating surfaces of the support frame 302 and the housing 101. In other example embodiments, the support frame 302 may be fixedly attached to the housing 101 by one or more fasteners, welding, soldering, or other suitable means of attachment. In still other example embodiments, the support frame 302 and/or the housing 101 may include one or more attachment protrusions, such as tabs or other contoured features, which are received within one or more mating attachment receptacles, such as slots or grooves, defined in the support frame 302 and/or the housing 101. For example, as shown, the support frame 302 may include a front protrusion 315, a back protrusion 316, a first side protrusion 317, and a second side protrusion 318 each configured to be received within a respective mating receptacle defined in the housing 101.

The front protrusion 315 may be fixedly attached to the front member 305 of the support frame 302 and may extend forwardly away from the front member 305. The front protrusion 315 may be formed as a tab having an inverted L-shape, as shown, and the mating receptacle of the housing 101 may have a corresponding shape. The back protrusion 316 may be fixedly attached to the back member 306 of the support frame 302 and may extend backwardly away from the back member 306. The back protrusion 316 may be formed as a tab having a T-shape, as shown, and the mating receptacle of the housing 101 may have a corresponding shape. The first side protrusion 317 may be fixedly attached to the first side member 307 of the support frame 302 and may extend upwardly away from the first side member 307. The first side protrusion 317 may be formed as a tab having an elongated shape and a snap-fit contour, as shown, and the mating receptacle of the housing 101 may have a corresponding shape such that the first side protrusion 317 may be snap-fit therein. In a similar manner, the second side protrusion 318 may be fixedly attached to the second side member 308 of the support frame 302 and may extend upwardly away from the second side member 308. The second side protrusion 318 may be formed as a tab having an elongated shape and a snap-fit contour, as shown, and the mating receptacle of the housing 101 may have a corresponding shape such that the second side protrusion 318 may be snap-fit therein. In certain example embodiments, as shown, the protrusions 315, 316, 317, 318 may be integrally formed with the members 305, 306, 307, 308. In other example embodiments, the protrusions 315, 316, 317, 318 may be separately formed and fixedly attached to the members 305, 306, 307, 308. The engagement between the protrusions 315, 316, 317, 318 and the mating receptacles of the housing 101 may ensure that the support frame 302 is restrained from movement in all directions with respect to the housing 101. Additionally, the protrusions 315, 316, 317, 318 may resist separation of the support frame 302 from the housing 101 when the tape measure 100 is dropped or hit with an object, and also may distribute loads applied to the finger brake 301 when the finger brake 301 is actuated by a user.

The flexible member 303 may extend over the frame opening 304 and over respective portions of the support frame 302, as shown. In this manner, the flexible member 303 may include an unsupported portion (*i*.*e*., the portion positioned over the frame opening 304) and multiple supported portions (*i*.*e*., the portions positioned over the respective members 305, 306, 307, 308 of the support frame 302). As shown, the flexible member 303 may include a base 319, a first sidewall 321, and a second sidewall 322. The base 319 may extend from the front member 305 to the back member 306 of the support frame 302. The first sidewall 321 may extend from the base 319 to the first side member 307 of the support frame 302 and from the front member 305 to the back member 306 of the support frame 302. In a similar manner, the second sidewall 322 may extend from the base 319 to the second side member 308 of the support frame 302 and from the front member 305 to the back member 306 of the support frame 302. The flexible member 303 may be formed of a flexible material, such that the unsupported portion of the flexible member 303 may be deflected or elastically deformed by a user. In certain example embodiments, the flexible member 303 may be formed of an elastomeric material, such as a thermoplastic rubber (TPR), natural rubber, silicone, or latex. Still other suitably flexible materials may be used to form the flexible member 303 in other example embodiments. In certain example embodiments, the flexible material of the flexible member 303 may have a durometer with the range of approximately 50 to 70 Shore A durometer, although softer or harder materials may be used in other example embodiments.

As shown, the base 319 of the flexible member 303 may include an inner surface 323 (which also may be referred to as a "top surface") and an opposite outer surface 324 (which also may be referred to as a "bottom surface"). In a similar manner, the first sidewall 321 may include an inner surface 325 and an outer surface 326, and the second sidewall 322 may include an inner surface 327 and an outer surface 328. The surfaces of the base 319 and the sidewalls 321, 322 may be smooth or may be textured. In certain example embodiments, as shown, the inner surfaces 323, 325, 327 of the base 319 and the sidewalls 321, 322 may be smooth, and the outer surfaces 324, 326, 328 of the base 319 and the sidewalls 321, 322 may be smooth. In other example embodiments, the inner surfaces 323, 325, 327 of the base 319 and the sidewalls 321, 322 may be smooth, and the outer surfaces 324, 326, 328 of the base 319 and the sidewalls 321, 322 may be textured. In still other example embodiments, the inner surfaces 323, 325, 327 of the base 319 and the sidewalls 321, 322 may be textured, and the outer surfaces 324, 326, 328 of the base 319 and the sidewalls 321, 322 may be smooth.

The base 319 of the flexible member 303 may be contoured to define a U-shaped channel 329 extending from the first sidewall 321 to the second sidewall 322, as shown. The shape of the channel 329 may allow a user to easily position and maintain the user's index finger therein and securely grip the flexible member 303. As shown, the base 319 may be contoured such that the top of the base 319 is positioned closer to the top of the support frame 302 than the bottom of the support frame 302. In this manner, the top of the base 319 may be positioned relatively close to the tape blade 141. Accordingly, when the user actuates the finger brake 301, the flexible member 303 may be moved only a relatively short distance before engaging the bottom surface 145 of a portion of the tape blade 141.

The support frame 302 and the flexible member 303 may be formed and fixedly attached to one another by a variety of methods. In certain example embodiments, the support frame 302 may be molded from a plastic, and the flexible member 303 may be overmolded onto the support frame 302. In such embodiments, the material chemistry of the flexible member 303 may be matched with the material of the support frame 302 to provide a chemical bond therebetween during the heated molding process. In other example embodiments, the support frame 302 may be molded from a plastic or cast from a metal, the flexible member 303 may be separately molded or otherwise formed, and the support frame 302 and the flexible member 303 then may be attached to one another. In such embodiments, the support frame 302 and the flexible member 303 may be fixedly attached to one another by one or more fasteners, one or more adhesives, chemical bonding, or other suitable means of attachment. In some example embodiments, the material of the support frame 302 may have a first color, and the material of the flexible member 303 may have a second color that is different than the first color. In this manner, the finger brake 301 may provide a color contrast between the support frame 302 and the flexible member 303, such that a user's attention is drawn to the finger brake 301 and the user intuitively is led to actuate the finger brake 301 by pressing the flexible member 303 and not the support frame 302.

The dimensions of the finger brake 301 may vary depending on the dimensions of the housing 101. As shown, the finger brake 301 may have an overall height *H_{B},* an overall length *L_{B},* and an overall width *W_{B}.* In certain example embodiments, the height *H_{B}* of the finger brake 301 may be within a range of between approximately 5% and approximately 25% of the height *H_{H}* of the housing 101. In certain example embodiments, the length *L_{B}* of the finger brake 301 may be within a range of between approximately 5% and approximately 50% of the length *L_{H}* of the housing 101. In certain example embodiments, the width *W_{B}* of the finger brake 301 may be within a range of between approximately 25% and approximately 100% of the width *W_{H}* of the housing 101.

The dimensions of the support frame 302 and the flexible member 303 of the finger brake 301 may vary depending on the dimensions of the finger brake 301 and the method by which the support frame 302 and the flexible member 303 are attached to one another. As shown, the members 305, 306, 307, 308 of the support frame 302 each may have a thickness *T_{M}* and a width *W_{M}.* In certain example embodiments, the thickness *T_{M}* of the members 305, 306, 307, 308 may be within a range of approximately 0.050 inches and approximately 0.130 inches, or within a range of approximately 0.080 inches and approximately 0.100 inches. In certain example embodiments, the width *W_{M}* of the members 305, 306, 307, 308 may be within a range of approximately 0.050 inches and approximately 0.130 inches, or within a range of approximately 0.080 inches and approximately 0.100 inches. Such ranges for the thickness *T_{M}* and the width *W_{M}* may ensure that the members 305, 306, 307, 308 provide an adequate substrate for elastomeric adhesion of the flexible member 303 to the support frame 302, and also may prevent or inhibit deflection of the support frame 302 during actuation of the finger brake 301.

As shown, the flexible member 303 may have a thickness *T_{F}*, a length *L_{F},* and a width *W_{F}.* In certain example embodiments, the thickness *T_{F}* of the flexible member 303 may be within a range of approximately 0.050 inches and 0.110 inches, or may be approximately 0.080 inches. Such ranges for the thickness *T_{F}* may ensure that a user has a desired tactile feel when braking the rewinding and retraction of the tape blade 141. However, a lesser thickness *T_{F}* of the flexible member 303 may be used to provide improved tactile feel, or a greater thickness *T_{F}* of the flexible member 303 may be used to provide improved durability of the flexible member 303. In certain example embodiments, the length *L_{F}* of the flexible member 303 may be within a range of approximately 80% and 100% of the length *L_{B}* of the finger brake 301. In certain example embodiments, the width *W_{F}* of the flexible member 303 may be within a range of approximately 80% and 100% of the width *W_{B}* of the finger brake 301. In certain example embodiments, the length *L_{F}* of the flexible member 303 may be within a range of between approximately 5% and approximately 50% of the length *L_{H}* of the housing 101. In certain example embodiments, the width *W_{F}* of the flexible member 303 may be within a range of between approximately 25% and approximately 100% of the width *W_{H}* of the housing 101.

As described above, the flexible member 303 may extend over the frame opening 304 and over respective portions of the support frame 302, such that the flexible member 303 includes an unsupported portion (*i*.*e*., the portion positioned over the frame opening 304) and supported portions (*i*.*e*., the portions positioned over the respective members 305, 306, 307, 308 of the support frame 302). As shown, the unsupported portion of the flexible member 303 may have a length *L_{U}* and a width *W_{U}.* In certain example embodiments, the length *L_{U}* of the unsupported portion of the flexible member 303 may be within a range of approximately 0.750 inches and approximately 1.500 inches, or within a range of approximately 1.000 inches and 1.250 inches. Such ranges for the length *L_{U}* may ensure that the unsupported portion of the flexible member 303 is able to accommodate the width of the index finger of a majority of users. In certain example embodiments, the length *L_{U}* of the unsupported portion of the flexible member 303 may be within a range of approximately 80% to approximately 100% of the length *L_{B}* of the finger brake 301. In certain example embodiments, the width *W_{U}* of the unsupported portion of the flexible member 303 may be within a range of approximately 80% to approximately 100% of the width *W_{B}* of the finger brake 301. Such ranges for the width *W_{U}* may ensure that the finger brake 301 may be easily accessed and actuated by both right-handed and left-handed users. As shown, the supported portions of the flexible member 303 may overlap the respective portions of the support frame 302. In certain example embodiments, the overlap may be within a range of approximately 0.040 inches to approximately 0.080 inches, or may be approximately 0.060 inches. Such ranges for the overlap may ensure long-term adhesion of the flexible member 303 to the support frame 302.

As described above, the finger brake 301 may be used to control extension and retraction of the tape blade 141 of the tape measure 100. In particular, the finger brake 301 may be configured to allow a user to maintain the tape blade 141 in a desired extended position and to brake the retraction and rewinding of the tape blade 141 into the housing 101. During use of the finger brake 301, a user may move the flexible member 303 of the finger brake 301 from a released position (which also may be referred to as an "unbraked position") to an engaged position (which also may be referred to as a "braked position"). In particular, the user may press the flexible member 303 with the user's index finger to deflect or elastically deform the flexible member 303 from the released position to the engaged position.

When the flexible member 303 is in the released position, the flexible member 303 may be spaced apart from the tape blade 141. In particular, when the flexible member 303 is in the released position, the inner surfaces 323, 325, 327 of the base 319 and the sidewalls 321, 322 of the flexible member 303 may be spaced apart from the bottom surface 145 of the tape blade 141. Additionally, when the flexible member 303 is in the released position, the support frame 302 may be spaced apart from the tape blade 141. In this manner, the tape blade 141 may be extended or retracted without interference from the finger brake 301 when the flexible member 303 is in the released position.

When the flexible member 303 is in the engaged position, the flexible member 303 may engage a portion of the tape blade 141 positioned within the interior space 103 of the housing 101. In particular, when the flexible member 303 is in the engaged position, one or more of the inner surfaces 323, 325, 327 of the base 319 and the sidewalls 321, 322 of the flexible member 303 may engage the bottom surface 145 of a portion of the tape blade 141 positioned within the interior space 103. Additionally, when the flexible member 303 is in the engaged position, the support frame 302 may be spaced apart from the tape blade 141. In this manner, the engagement between the flexible member 303 and the tape blade 141 may generate a frictional force that prevents or inhibits extension and retraction of the tape blade 141. When the flexible member 303 is in the engaged position, the top surface 144 of a portion of the tape blade 141 positioned within the tape opening 121 may engage an adjacent portion of the housing 101 defining the tape opening 121. In this manner, the engagement between the tape blade 141 and the housing 101 also may generate a frictional force that prevents or inhibits extension and retraction of the tape blade 141. Ultimately, the frictional forces generated when the flexible member 303 is in the engaged position may allow the user to maintain the tape blade 141 in a desired extended position or to brake the retraction and rewinding of the tape blade 141 into the housing 101.

As shown, the finger brake 301 may include one or more stop feet 335 configured to oppose locking forces applied to the tape blade 141 by the tape lock 151. In certain example embodiments, as shown, each stop foot 335 may be defined entirely by the support frame 302. In other words, the stop feet 335 may be a part of the support frame 302. In this manner, the stop feet 335 may be formed of a rigid or substantially rigid material. In other example embodiments, each stop foot 335 may be defined entirely by the flexible member 303. In other words, the stop feet 335 may be a part of the flexible member 303. In this manner, the stop feet 335 may be formed of a flexible material. In still other example embodiments, each stop foot 335 may include a first stop foot portion defined by the support frame 302 and a second stop foot portion defined by the flexible member 303. In other words, the first stop foot portion may be a part of the support frame 302 and the second stop foot portion may be a part of the flexible member 303. In this manner, the first stop foot portion may be formed of a rigid or substantially rigid material, and the second stop foot portion may be formed of a flexible material. As shown, the stop feet 335 may be positioned at or near the front end of the finger brake 301. In this manner, the stop feet 335 may be positioned below the engagement finger 152 when the tape lock 151 is in the engaged position, such that the stop feet 335 oppose the locking forces applied to the tape blade 141.

Although specific embodiments of the disclosure have been described, numerous other modifications and alternative embodiments are within the scope of the claimed invention. For example, any of the functionality described with respect to a particular device or component may be performed by another device or component.

## Claims

1. A tape measure comprising:
a housing comprising an interior space and a brake opening in communication with the interior space;
a reel rotatably supported within the interior space;
a tape blade at least partially wound on the reel; and
a finger brake positioned adjacent the brake opening, the finger brake comprising:
a support frame attached to the housing and comprising a frame opening; and
a flexible member attached to the support frame and extending over the frame opening, wherein the flexible member is configured to deflect or elastically deform from a released position in which the flexible member is spaced apart from the tape blade to an engaged position in which at least a portion of the flexible member contacts a portion of the tape blade.

2. The tape measure of claim 1, wherein the housing comprises a top wall, a bottom wall, a front wall, a back wall, a first side wall, and a second side wall, and wherein the brake opening is defined in the bottom wall of the housing.

3. The tape measure of claim 1 or claim 2, wherein the housing further comprises a tape opening in the front wall of the housing and in communication with the interior space, and wherein the tape opening is configured to allow the tape blade to pass therethrough.

4. The tape measure of any preceding claim, further comprising a tape lock configured to selectively maintain the tape blade in a desired extended position, wherein the housing further comprises a lock opening in the front wall of the housing and in communication with the interior space, and wherein the tape lock is positioned at least partially within the lock opening.

5. The tape measure of any preceding claim, further comprising a retraction mechanism configured to automatically retract an extended portion of the tape blade into the housing.

6. The tape measure of any preceding claim, wherein the finger brake completely covers the brake opening.

7. The tape measure of any preceding claim, wherein the support frame is formed of a rigid or substantially rigid material, and wherein the flexible member is formed of a flexible material.

8. The tape measure of any preceding claim, wherein the support frame is formed of a plastic or a metal, and wherein the flexible member is formed of an elastomeric material.

9. The tape measure of any preceding claim, wherein the support frame is fixedly attached to the housing, and wherein the support frame comprises one or more attachment protrusions received within one or more attachment receptacles defined in the housing.

10. The tape measure of any preceding claim, wherein the support frame comprises a front member, a back member, a first side member, and a second side member attached to one another and extending around the frame opening, and wherein the flexible member comprises a base extending from the front member to the back member, a first sidewall extending from the base to the first side member and from the front member to the back member, and a second sidewall extending from the base to the second side member and from the front member to the back member.

11. The tape measure of claim 10, wherein inner surfaces of the base, the first sidewall, and the second sidewall are substantially smooth, and wherein outer surfaces of the base, the first sidewall, and the second sidewall are textured.

12. The tape measure of claim 10 or claim 11, wherein the flexible member further comprises an engagement protrusion positioned on an inner surface of the base and configured to engage a portion of the tape blade when the flexible member is in the engaged position.

13. The tape measure of any preceding claim, wherein the flexible member comprises an unsupported portion positioned over the frame opening, and a plurality of supported portions positioned over respective portions of the support frame.

14. The tape measure of claim 13, wherein a length of the unsupported portion is within a range of between approximately 80% and approximately 100% of a length of the finger brake, and wherein a width of the unsupported portion is within a range of between approximately 80% and approximately 100% of a width of the finger brake.

15. The tape measure of any preceding claim, wherein a height of the finger brake is within a range of between approximately 5% and approximately 25% of a height of the housing, wherein a length of the finger brake is within a range of between approximately 5% and approximately 50% of a length of the housing, and wherein a width of the finger brake is within a range of between approximately 25% and approximately 100% of a width of the housing.
